# EUROPEAN PATENT APPLICATION

(11) **EP 4 589 426 A1**
(43) Date of publication of application: **23.07.2025**
(21) Application number: 24830996.5
(22) Date of filing: 28.06.2024
(51) Int. Cl.: G06F 9/4401

(54) **HARDWARE DEVICE CALLING METHOD AND APPARATUS**

(30) Priority: 28.06.2023 CN 202310782520
(71) Applicant: Honor Device Co., Ltd., Shenzhen, Guangdong 518040 (CN)
(72) Inventor: LIANG, Yuxing, Shenzhen, Guangdong 518040 (CN); LI, Yu, Shenzhen, Guangdong 518040 (CN); GAO, Lei, Shenzhen, Guangdong 518040 (CN); YANG, Heng, Shenzhen, Guangdong 518040 (CN)
(74) Representative: Thun, Clemens
(86) International application number: PCT/CN2024/102425
(87) International publication number: WO 2025/002367

(57) **Abstract**

This application provides a hardware device calling method and apparatus. This improves compatibility, scalability, and flexibility of calling a hardware device of a second terminal device by a first terminal device. The method includes: A first terminal device obtains hardware device information of a second terminal device, where the hardware device information includes device identification information of the second terminal device, type identification information of at least one hardware device of the second terminal device, and hardware device capability information of the at least one hardware device. The first terminal device creates one virtual device driver for each hardware device of the at least one hardware device based on the hardware device information through a virtual bus driver. When detecting a message request of calling a first hardware device of the at least one hardware device by a first application through a first virtual device driver, the first terminal device receives a data stream from the second terminal device over a data channel, where the first virtual device driver is created by the virtual bus driver based on hardware device information of the first hardware device.

## Description

This application claims priority to Chinese Patent Application No. 202310782520.1, filed with the China National Intellectual Property Administration on June 28, 2023 and entitled "HARDWARE DEVICE CALLING METHOD AND APPARATUS", which is incorporated herein by reference in its entirety.

### TECHNICAL FIELD

This application relates to the field of terminal technologies, and in particular, to a hardware device calling method and apparatus.

### BACKGROUND

Currently, for terminal devices that support a connectivity service, such as a mobile phone, a tablet computer, and a notebook computer, a user may interconnect a first terminal device and a second terminal device by using the connectivity service, so that a hardware device of the second terminal device, such as a camera, a microphone, or a speaker, is used on the first terminal device by using an application.

For example, the first terminal device is a notebook computer, the second terminal device is a mobile phone, the hardware device is a camera, and the application is a meeting application. When the user has a video meeting on the notebook computer and needs to present an experiment, it may be difficult to shoot an entire presentation image by using a camera of the notebook computer. The notebook computer may call a camera function of the mobile phone to obtain video data shot by the camera of the mobile phone, improving video presentation effect. Specifically, the notebook computer includes a developed virtual device driver. The notebook computer calls, through the virtual device driver, the camera of the mobile phone to perform image shooting, and obtains the shot video data.

However, this hardware device calling method is less compatible, scalable, and flexible.

### SUMMARY

This application provides a hardware device calling method and apparatus. This can improve compatibility, scalability, and flexibility of calling a hardware device of a second terminal device by a first terminal device.

According to a first aspect, a hardware device calling method is provided, and is applied to a system including a first terminal device and a second terminal device. A user logs in to a same account on the first terminal device and the second terminal device, a wireless fidelity WiFi switch and a Bluetooth switch of each of the first terminal device and the second terminal device are both in an on state. The method includes: When detecting the second terminal device, the first terminal device obtains hardware device information of the second terminal device, where the hardware device information includes device identification information of the second terminal device, type identification information of at least one hardware device of the second terminal device, and hardware device capability information of the at least one hardware device; the first terminal device creates one virtual device driver for each hardware device of the at least one hardware device based on the hardware device information through a virtual bus driver, where the virtual bus driver is used to manage the virtual device driver; and when detecting a message request of calling a first hardware device of the at least one hardware device by a first application through a first virtual device driver, the first terminal device receives a data stream from the second terminal device over a data channel, where the first virtual device driver is created by the virtual bus driver based on hardware device information of the first hardware device.

According to the hardware device calling method of this application, when the first terminal device detects the second terminal device, the first terminal device may obtain the hardware device information of the hardware device of the second terminal device; the first terminal device may create, based on the hardware device information of each hardware device through the virtual bus driver, the virtual device driver corresponding to each hardware device; and then, when the first terminal device needs to call a hardware device of the second terminal device, the first terminal device may obtain the data stream from the second terminal device through a virtual device driver corresponding to the hardware device. It can be learned that the first terminal device may dynamically create virtual device drivers with different attributes based on a type of a hardware device and a quantity of hardware devices of the second terminal device through the virtual bus driver. In this way, when the first terminal device calls a hardware device other than the camera of the second terminal device, there is no need to newly develop a virtual device driver of the hardware device other than the camera, improving scalability of the hardware device calling method. In addition, the virtual bus driver may create a virtual device driver corresponding to any USB hardware device, so that the first terminal device can call a plurality of types of USB hardware devices, improving compatibility of the hardware device calling method. Moreover, the first terminal device may create a corresponding quantity of virtual device drivers based on the quantity of hardware devices of the second terminal device, and when the first terminal device does not need to call the hardware device of the second terminal device, the first terminal device may further delete the virtual device driver through the virtual bus driver, and may delete the virtual bus driver, improving flexibility of the hardware device calling method.

It should be understood that an account may mean personal registration accounts provided by different terminal device brands that are used to ensure user device security. After the first terminal device and the second terminal device are logged in to the same account, data sharing between devices may be implemented. When the first terminal device and the second terminal device are logged in to the same account, and the WiFi switch and the Bluetooth switch of each of the first terminal device and the second terminal device are both in an on state both in an on state, the first terminal device can detect the second terminal device.

In some implementations of the first aspect, the first terminal device includes an application layer and a kernel layer; the application layer includes the first application, a first device virtualization module, and a first communication service manager, where the first device virtualization module is configured to control creation and deletion of the virtual device driver and processes a request from an application, and the first communication service manager is used for data transmission between devices; and the kernel layer includes the virtual bus driver, the virtual device driver, and a driver development framework.

It should be understood that there may be no virtual device driver or a plurality of virtual device drivers. When there are a plurality of virtual device drivers, attributes of any two of the plurality of virtual device drivers may be different.

In some implementations of the first aspect, that the first terminal device obtains hardware device information of the second terminal device includes: The first device virtualization module obtains the hardware device information; and the first terminal device creates one virtual device driver for each hardware device of the at least one hardware device based on the hardware device information through a virtual bus driver includes: The first device virtualization module creates, through the virtual bus driver, a virtual device driver corresponding to attributes indicated by type identification information, device identification information, and hardware device capability information of each hardware device.

It should be understood that the first device virtualization module may be configured to implement data transmission between the first terminal device and the second terminal device, and can control the virtual bus driver to create the virtual device driver. The first terminal device can obtain the hardware device information from the second terminal device by using the first virtualization module, and control, by using the first virtualization module, the virtual bus driver to create or delete the virtual device driver.

In some implementations of the first aspect, the creating a virtual device driver corresponding to attributes indicated by type identification information, device identification information, and hardware device capability information of each hardware device includes: The first device virtualization module converts the type identification information and the device identification information of each hardware device into a hardware device type descriptor in a universal serial bus USB protocol, and converts the hardware device capability information of each hardware device into a hardware device configuration descriptor in the USB protocol; the first device virtualization module transmits the hardware device type descriptor and the hardware device configuration descriptor to the virtual bus driver; and the virtual bus driver creates the virtual device driver corresponding to the hardware device type descriptor and the hardware device configuration descriptor.

It should be understood that each available hardware device of the second terminal device may be recognized as one USB device by the first terminal device, and the first device virtualization module needs to create the corresponding virtual device driver for each hardware device of the second terminal device. The hardware device type descriptor may be understood as a device descriptor, and the hardware device configuration descriptor may be understood as a configuration descriptor. In addition to the hardware device type descriptor and the hardware device configuration descriptor, the first device virtualization module may further configure another type of descriptor, for example, a character string descriptor, for each hardware device. The virtual bus driver can create a virtual device driver corresponding to each hardware device descriptor.

In some implementations of the first aspect, the second terminal device includes a second communication service manager, and the first communication service manager and the second communication service manager are used to implement data transmission between the first terminal device and the second terminal device; and that the first device virtualization module obtains the hardware device information includes: The first device virtualization module establishes a control channel; the first communication service manager sends a first request to the second communication service manager over the control channel, where the first request is used to request the hardware device information; the first communication service manager receives the hardware device information from the second communication service manager; and the first communication service manager transmits the hardware device information to the first device virtualization module.

It should be understood that the second terminal device may be a terminal device such as a mobile phone or a tablet computer. The second terminal device may be equipped with an Android system, and a software structure of the second terminal device may include an application layer and an application framework layer. The application framework layer of the second terminal device may include the second communication service manager. The control channel may be a data transmission channel used to transmit a control request.

In some implementations of the first aspect, after the first communication service manager transmits the hardware device information to the first device virtualization module, the method further includes: The first device virtualization module deletes the control channel.

It should be understood that when a control request needs to be transmitted between the first terminal device and the second terminal device, for example, the first terminal device needs to obtain the hardware device information of the second terminal device by using the device virtualization module, the first device virtualization module may create the control channel; or when the first terminal device does not need to send the control request to the second terminal device, the first device virtualization module may delete the control channel. For example, after the first terminal device creates the virtual device driver corresponding to each hardware device of the second terminal device, the first device virtualization module may determine that the first terminal device does not need to send the control request to the second terminal device in a specific time period, and may delete the control channel.

In some implementations of the first aspect, that the first device virtualization module establishes a control channel includes: When the hardware device information is not capable of being read from a cloud server, the first device virtualization module establishes the control channel.

It should be understood that when the hardware device information of the second terminal device is stored in the cloud server, the first terminal device may directly obtain the hardware device information from the cloud server; or when the cloud server does not store the hardware device information of the second terminal device, the first terminal device needs to obtain the hardware device information from the second terminal device. In this case, the first terminal device needs the second terminal device to send the control request used to request the hardware device information. Therefore, the first device virtualization module establishes the control channel.

In some implementations of the first aspect, the method further includes: When detecting that a buffer message queue corresponding to the first virtual device driver changes, the first device virtualization module reads a second request from the buffer message queue, where the second request is used to request to obtain the data stream; and that the first terminal device receives a data stream from the second terminal device over a data channel includes: The first device virtualization module sends the data stream to the virtual bus driver based on the second request; and the virtual bus driver matches the data stream with the second request in the buffer message queue and performs encapsulation to obtain an encapsulated data packet, and feeds back the encapsulated data packet to the first application.

It should be understood that the first device virtualization module may monitor, in real time, a buffer message queue corresponding to each virtual device driver. When the buffer message queue corresponding to the first virtual device driver changes, the first device virtualization module may read a request in the buffer message queue corresponding to the first virtual device driver. The second request may be a data request, and is used to request to transmit a data stream, for example, to transmit video data or audio data. The buffer message queue is a message queue used to buffer a message request related to the first virtual device driver. Therefore, when receiving the data stream from the first device virtualization module, the virtual bus driver needs to match the corresponding second request in the buffer message queue with the data stream, and encapsulate the second request and the data stream.

In some implementations of the first aspect, the method further includes: When detecting that the second terminal device is offline, the first terminal device deletes, through the virtual bus driver, a virtual device driver corresponding to the at least one hardware device, where the second terminal device being offline indicates that a WiFi switch and/or a Bluetooth switch of at least one device of the first terminal device and the second terminal device are/ is in an off state, or the first terminal device and the second terminal device are not logged in to a same account.

It should be understood that if the second terminal device is offline, the first terminal device cannot continue to detect the second terminal device. Therefore, the first terminal device cannot continue to call the hardware device of the second terminal device, and the first terminal device may delete, through the virtual bus driver, the virtual device driver corresponding to the at least one hardware device.

In some implementations of the first aspect, that the first terminal device deletes, through the virtual bus driver, a virtual device driver corresponding to the at least one hardware device includes: The first communication service manager detects that the second terminal device is offline, and notifies the first device virtualization module to delete the virtual device driver corresponding to the at least one hardware device; the first device virtualization module transmits, to the virtual bus driver, a deletion message of the virtual device driver corresponding to the at least one hardware device; and the virtual bus driver deletes, based on the deletion message, the virtual device driver corresponding to the at least one hardware device.

It should be understood that the first terminal device and the second terminal device implement connectivity through the first communication service manager and the second communication service manager. When the first communication service manager cannot be connected to the second communication service manager, the first communication service manager may determine that the second terminal device is offline. When the second terminal device is offline, the first communication service manager sends, to the first device virtualization module, a message indicating to delete the virtual device driver corresponding to the at least one hardware device. The first device virtualization module controls, based on the message, the virtual bus driver to delete the virtual device driver corresponding to the at least one hardware device.

In some implementations of the first aspect, that the first terminal device obtains hardware device information of the second terminal device includes: when a first switch key on a setting interface of the first terminal device and a second switch key on a setting interface of the second terminal device are in an on state, obtaining the hardware device information, where the first switch key is used by the user to choose to enable or disable a function of calling a hardware device, and the second switch key is used by the user to choose to enable or disable a called function of the hardware device.

It should be understood that a setting interface may be a system setting interface of a terminal device, or a setting interface of an application of the terminal device. When the first switch key and the second switch key are both in an on state, the first terminal device can call the hardware device of the second terminal device.

In some implementations of the first aspect, the method further includes: When the first switch key and/or the second switch key are/is switched from the on state to an off state, the first terminal device deletes, through the virtual bus driver, the virtual device driver corresponding to the at least one hardware device.

It should be understood that when the first switch key and/or the second switch key are/is switched from the on state to the off state, the first terminal device cannot continue to call the hardware device of the second terminal device, and therefore the first terminal device may delete, through the virtual bus driver, the virtual device driver corresponding to the at least one hardware device.

In some implementations of the first aspect, the method further includes: The first terminal device displays the setting interface, where the setting interface includes the first switch key; and adjusts the first switch key to the on state or the off state based on a selection operation performed by the user on the first switch key.

It should be understood that the selection operation may be a tap operation, a slide operation, or the like, and the selection operation of the user can switch a status of the first switch key.

In some implementations of the first aspect, the first terminal device includes a second application; and that the first terminal device installs the virtual bus driver includes: The first terminal device installs the virtual bus driver by using the second application.

It should be understood that the second application can call an installation script and an installation package of the virtual bus driver, to install the virtual bus driver. For example, the second application may be a PC manager.

In some implementations of the first aspect, before the first terminal device obtains the hardware device information of the second terminal device, the method further includes: The first terminal device detects whether a call condition of the hardware device is met, where the call condition includes at least one of the following: a device type of the second terminal device is a preset type; the first terminal device supports a capability of calling the hardware device; or a function of calling the hardware device by the first terminal device is in an on state; and the obtaining hardware device information of the second terminal device includes: obtaining the hardware device information when the call condition is met.

It should be understood that, when the first terminal device finds the second terminal device, the first terminal device can obtain the device type of the second terminal device. The preset type may include a mobile phone, a tablet computer, or the like. The first terminal device can call a hardware device of a second terminal device of a preset type. That the first terminal device supports the capability of calling the hardware device may be understood as that the virtual bus driver is installed in the first terminal device. That the function of calling the hardware device by the first terminal device is in an on state may be understood as that the first switch key is in an on state.

In some implementations of the first aspect, that the first terminal device obtains hardware device information of the second terminal device includes: The first terminal device reads the hardware device information from the cloud server.

It should be understood that when the hardware device information of the second terminal device is stored in the cloud server, the first terminal device may directly obtain the hardware device information from the cloud server. This can improve efficiency of obtaining the hardware device information of the second terminal device by the first terminal device.

In some implementations of the first aspect, the at least one hardware device includes a camera and/or a microphone.

According to a second aspect, this application provides a hardware device calling apparatus, including a processor. The processor is coupled to a memory, and may be configured to execute instructions in the memory, to implement the method according to any one of the possible implementations of the first aspect. Optionally, the apparatus further includes the memory. Optionally, the apparatus further includes a communication interface, and the processor is coupled to the communication interface.

In an implementation, the apparatus is a first terminal device. When the apparatus is the first terminal device, the communication interface may be a transceiver or an input/output interface.

In another implementation, the apparatus is a chip disposed in a terminal device. When the apparatus is a chip disposed in a terminal device, the communication interface may be an input/output interface.

According to a third aspect, a processor is provided, including an input circuit, an output circuit, and a processing circuit. The processing circuit is configured to receive a signal by using the input circuit, and transmit a signal by using the output circuit, to enable the processor to perform the method according to any possible implementation in the first aspect.

In a specific implementation procedure, the processor may be a chip, the input circuit may be an input pin, the output circuit may be an output pin, and the processing circuit may be a transistor, a gate circuit, a flip-flop, various logic circuits, and the like. The input signal received by the input circuit may be received and input by, for example, but not limited to, a receiver. The signal output by the output circuit may be output to and transmitted by, for example, but not limited to, a transmitter. The input circuit and output circuit may be a same circuit that serves as an input circuit and an output circuit respectively at different moments. Specific implementations of the processor and the various circuits are not limited in this embodiment of this application.

According to a fourth aspect, a processing apparatus is provided, including a processor and a memory. The processor is configured to read instructions stored in the memory, and can receive a signal through a receiver and transmit a signal through a transmitter, to perform the method according to any one of the possible implementations of the first aspect.

Optionally, there are one or more processors, and there are one or more memories.

Optionally, the memory and the processor may be integrated together, or the memory and the processor are separately disposed.

In a specific implementation procedure, the memory may be a non-transitory (non-transitory) memory, such as a read-only memory (read-only memory, ROM). The memory and the processor may be integrated into a same chip, or may be separately disposed on different chips. A type of the memory and a manner in which the memory and the processor are disposed are not limited in this application.

It should be understood that a related data exchange procedure, for example, sending of indication information, may be a procedure of outputting the indication information from the processor, and receiving of capability information may be a procedure of receiving input capability information by the processor. Specifically, data output by the processing may be output to the transmitter, and input data received by the processor may be from the receiver. The transmitter and the receiver may be collectively referred to as a transceiver.

The processing apparatus in the fourth aspect may be a chip. The processor may be implemented by using hardware or software. When the processor is implemented by using hardware, the processor may be a logic circuit, an integrated circuit, or the like; or when the processor is implemented by using software, the processor may be a general-purpose processor, and is implemented by reading software code stored in the memory. The memory may be integrated into the processor, or may exist independently outside the processor.

According to a fifth aspect, a computer program product is provided. The computer program product includes a computer program (also referred to as code or an instruction), and when the computer program is run, the computer executes the method in any one of the foregoing possible implementations of the first aspect.

According to a sixth aspect, a computer-readable storage medium is provided, where the computer-readable storage medium stores a computer program (also referred to as code or instructions), and when the computer program is run on a computer, the computer is enabled to perform the method in any one of the foregoing possible implementations of the first aspect.

### BRIEF DESCRIPTION OF THE DRAWINGS

FIG. 1 is a diagram of a structure of a terminal device according to an embodiment of this application;
FIG. 2 is a diagram of an application scenario according to an embodiment of this application;
FIG. 3 is a block diagram of a software structure of a Windows system of a terminal device according to an embodiment of this application;
FIG. 4 is a schematic flowchart of a hardware device calling method according to an embodiment of this application;
FIG. 5 is a diagram of a process in which a first application obtains a data stream or hardware device information according to an embodiment of this application;
FIG. 6 is a schematic flowchart of another hardware device calling method according to an embodiment of this application;
FIG. 7A to FIG. 7C are a schematic flowchart of still another hardware device calling method according to an embodiment of this application;
FIG. 8 is a diagram of an interface for displaying a device manager on a notebook computer according to an embodiment of this application;
FIG. 9 is a diagram of an interface for displaying a second interface on a notebook computer according to an embodiment of this application;
FIG. 10 is a diagram of another interface for displaying a device manager on a notebook computer according to an embodiment of this application;
FIG. 11 is a diagram of another interface for displaying a virtual device on a notebook computer according to an embodiment of this application; and
FIG. 12 is a block diagram of a hardware device calling apparatus according to an embodiment of this application.

### DESCRIPTION OF EMBODIMENTS

The following describes technical solutions of this application with reference to accompanying drawings.

In embodiments of this application, the terms such as "first" and "second" are used to distinguish between same or similar items with basically same functions or purposes. For example, a first value and a second value are merely used to distinguish between different values, but not limit a sequence thereof. A person skilled in the art may understand that the terms such as "first" and "second" do not limit a quantity or an execution sequence, and the terms such as "first" and "second" do not indicate a definite difference.

It should be noted that the word "example", "for example", or the like in embodiments of this application is used to represent giving an example, an illustration, or a description. Any embodiment or design solution described as "an example" or "for example" in this application should not be explained as being more preferred or having more advantages than another embodiment or design solution. Exactly, use of the word "example", "for example", or the like is intended to present a relative concept in a specific manner.

In embodiments of this application, "at least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

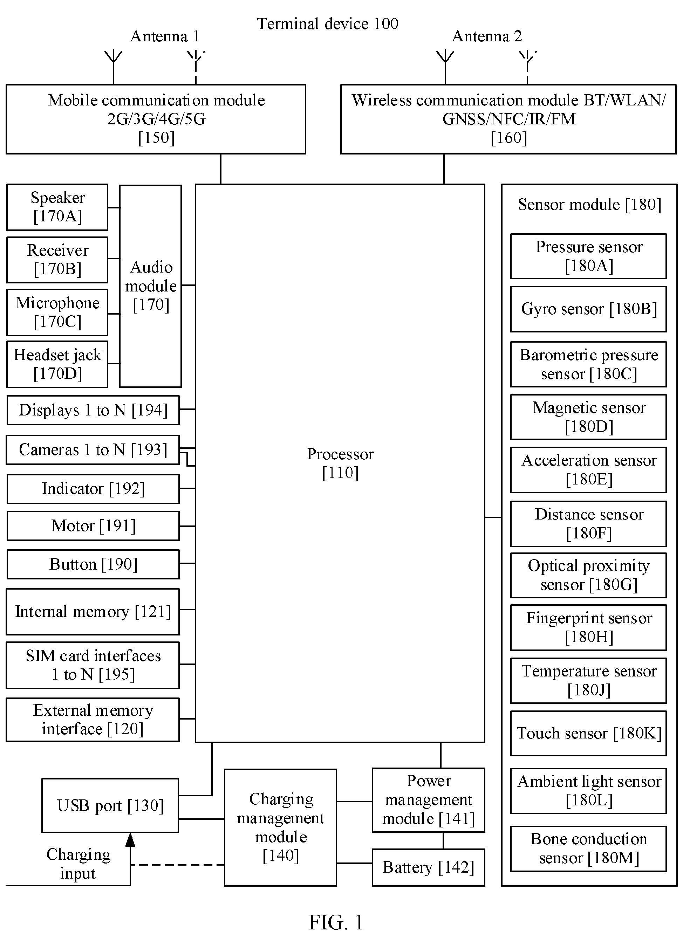

To better understand a terminal device in embodiments of this application, the following describes in detail a hardware structure of the terminal device in embodiments of this application with reference to FIG. 1.

FIG. 1 is a diagram of a structure of a terminal device 100 according to an embodiment of this application. As shown in FIG. 1, the terminal device 100 may include a processor 110, an external memory interface 120, an internal memory 121, a universal serial bus (universal serial bus, USB) port 130, a charging management module 140, a power management module 141, a battery 142, an antenna 1, an antenna 2, mobile communication module 150, wireless communication module 160, an audio module 170, a speaker 170A, a receiver 170B, a microphone 170C, a headset jack 170D, a sensor module 180, a button 190, a motor 191, an indicator 192, a camera 193, a display 194, and a user identification module (subscriber identification module, SIM) interface 195. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of this application does not constitute a specific limitation on the terminal device 100. In some other embodiments of this application, the terminal device 100 may include more or fewer components than those shown in the figure, or some components may be combined, or some components may be split, or a different component arrangement may be used. The components in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The controller may generate an operation control signal based on an instruction operation code and a time sequence signal, to complete control of instruction fetch and instruction execution.

A memory can be further disposed in the processor 110, and is configured to store instructions and data. In some embodiments, the memory in the processor 110 is a cache memory. The memory may store an instruction or data that has been used or cyclically used by the processor 110. If the processor 110 needs to reuse the instructions or the data, the processor may directly invoke the instructions or the data from the memory. This avoids repeated access, reduces waiting time of the processor 110, and improves system efficiency.

In some embodiments, the processor 110 can include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (derail clock line, SCL). In some embodiments, the processor 110 may include a plurality of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be configured for audio communication. In some embodiments, the processor 110 may include a plurality of groups of I2S buses. The processor 110 may be coupled to the audio module 170 through the I2S bus to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured for audio communication, and analog signal sampling, quantization, and coding. In some embodiments, the audio module 170 and the wireless communication module 160 may be coupled through a PCM bus interface. In some embodiments, the audio module 170 may alternatively transfer an audio signal to the wireless communication module 160 through the PCM interface to implement a function of answering calls through a Bluetooth headset. Both the I2S interface and the PCM interface may be configured for audio communication.

The UART interface is a universal serial data bus used for asynchronous communication. The bus may be a bidirectional communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the terminal device 100. The processor 110 communicates with the display 194 through the DSI, to implement a display function of the terminal device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may be further configured as the I2C interface, the I2S interface, the UART interface, the MIPI interface, or the like.

The USB port 130 is an interface that conforms to a USB standard specification, and may be specifically a mini USB port, a micro USB port, a USB type-C port, or the like. The USB port 130 may be configured to connect to the charger to charge the terminal device 100, or may be configured to transmit data between the terminal device 100 and a peripheral device. The USB port 130 may alternatively be configured to connect to a headset, to play audio through the headset. The port may alternatively be configured to be connected to another terminal device, for example, an AR device.

It may be understood that an interface connection relationship between the modules shown in this embodiment of this application is merely an example for description, and does not constitute a limitation on the structure of the terminal device 100. In some other embodiments of this application, the terminal device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input by using a wireless charging coil of the terminal device 100. While charging the battery 142, the charging management module 140 may further supply power to the terminal device by using the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like. The power management module 141 may be further configured to monitor a parameter like a battery capacity, a battery cycle count, or a battery health status (electric leakage or impedance). In some other embodiments, the power management module 141 may alternatively be provided in the processor 110. In some other embodiments, the power management module 141 and the charging management module 140 may alternatively be provided in a same device.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed to improve antenna utilization. For example, the antenna 1 can be a plurality multiplexed as a diversity antenna of a wireless local area network. In some other embodiments, the antenna can be used in combination with a tuning switch.

The mobile communication module 150 can provide a wireless communication solution that is applied to the terminal device 100 and that includes 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules of the mobile communication module 150 may be arranged in the processor 110. In some embodiments, at least some of the functional modules of the mobile communication module 150 may be disposed in a same device as at least some of modules of the processor 110.

The modem processor can include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the demodulated low-frequency baseband signal to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent device. In some other embodiments, the modem processor may be independent of the processor 110, and disposed in a same component as the mobile communication module 150 or another functional module.

The wireless communication module 160 may provide a wireless communication solution that is applied to the terminal device 100, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave by using the antenna 2, performs frequency modulation on the electromagnetic wave signal, filters the electromagnetic wave signal, and sends a processed signal to the processor 110. The wireless communication module 160 may also receive a to-be-sent signal from the processor 110, perform frequency modulation on and amplify the to-be-sent signal, and convert the to-be-sent signal into an electromagnetic wave by using the antenna 2 for radiation.

In some embodiments, in the terminal device 100, the antenna 1 and the mobile communication module 150 are coupled, and the antenna 2 and the wireless communication module 160 are coupled, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The terminal device 100 implements a display function by using the GPU, the display 194, the application processor, and the like. The GPU is a microprocessor for image processing and is connected to the display 194 and the application processor. The GPU is configured to perform mathematical and geometric calculation for graphic rendering. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, quantum dot light-emitting diodes (quantum dot light emitting diodes, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and skin tone of the image. The ISP may further optimize parameters such as exposure and a color temperature of a photographing scenario. In some embodiments, the ISP may be disposed in the camera 193.

The camera 193 is configured to capture a still image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP for converting the electrical signal into a digital image signal. The ISP outputs the digital image signal to the DSP for processing. The DSP converts the digital image signal into an image signal in a standard format like an RGB format or a YUV format. In some embodiments, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency bin, the digital signal processor is configured to perform Fourier transformation or the like on energy at the frequency bin.

The video codec is configured to compress or decompress a digital video. The terminal device 100 can support one or more video codecs. In this way, the terminal device 100 may play or record videos in a plurality of encoding formats, for example, moving picture experts group (moving picture experts group, MPEG)1, MPEG2, MPEG3, and MPEG4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the terminal device 100 may be implemented through the NPU, for example, image recognition, facial recognition, speech recognition, and text understanding.

The external memory interface 120 may be used to connect to an external storage card, for example, a micro SD card, to extend a storage capability of the terminal device 100. The external memory card communicates with the processor 110 through the external memory interface 120, to implement a data storage function. For example, files such as music and videos are stored in the external storage card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created in a process of using the terminal device 100, and the like. In addition, the internal memory 121 may include a high-speed random access memory, and may further include a non-volatile memory, for example, at least one magnetic disk storage device, a flash memory device, or a universal flash storage (universal flash storage, UFS). The processor 110 runs instructions stored in the internal memory 121 and/or instructions stored in the memory disposed in the processor, to perform various function applications and data processing of the terminal device 100.

The terminal device 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to: encode and decode an audio signal. In some embodiments, the audio module 170 may be disposed in the processor 110, or some functional modules of the audio module 170 may be disposed in the processor 110.

The speaker 170A, also referred to as a "loudspeaker", is configured to convert an electrical audio signal into a sound signal. Music can be listened to or a hands-free call can be answered by using the speaker 170A in the terminal device 100.

The receiver 170B, also referred to as an "earpiece", is configured to convert an electrical audio signal into a sound signal. When a call is answered or audio information is listened to by using the terminal device 100, the receiver 170B may be put close to a human ear to listen to a voice.

The microphone 170C, also referred to as a "mike" or a "mic", is configured to convert a sound signal into an electrical signal. When making a call or sending voice information, a user may place the mouth of the user near the microphone 170C to make a sound, to input a sound signal to the microphone 170C. At least one microphone 170C may be disposed in the terminal device 100. In some other embodiments, two microphones 170C may be disposed in the terminal device 100, to collect a sound signal and further implement a noise reduction function. In some other embodiments, three, four, or more microphones 170C may alternatively be disposed in the terminal device 100, to collect a sound signal, reduce noise, identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The terminal device 100 determines intensity of the pressure based on the change in the capacitance. When a touch operation is performed on the display 194, the terminal device 100 detects intensity of the touch operation by using the pressure sensor 180A. The terminal device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a messages icon, an instruction for viewing an SMS message is executed. When a touch operation whose touch operation intensity is greater than or equal to the first pressure threshold is performed on the messaging application icon, an instruction for creating a new SMS message is performed.

The gyro sensor 180B may be configured to determine a motion posture of the terminal device 100. In some embodiments, angular velocities of the terminal device 100 around three axes (that is, axes x, y, and z) may be determined by using the gyro sensor 180B. The gyro sensor 180B may be configured to implement image stabilization during shooting. For example, when the shutter is pressed, the gyro sensor 180B detects a shake angle of the terminal device 100, calculates, based on the angle, a distance that needs to be compensated for by a lens module, and allows the lens to cancel the shake of the terminal device 100 through reverse motion, to implement image stabilization. The gyro sensor 180B may be further used in a navigation scenario and a motion-sensing game scenario.

The barometric pressure sensor 180C is configured to measure barometric pressure. In some embodiments, the terminal device 100 calculates an altitude based on a value of the barometric pressure measured by the barometric pressure sensor 180C, to assist in positioning and navigation.

The magnetic sensor 180D includes a Hall sensor. The terminal device 100 may detect opening and closing of a flip leather case by using the magnetic sensor 180D. In some embodiments, when the terminal device 100 is a flip phone, the terminal device 100 may detect opening and closing of a flip cover based on the magnetic sensor 180D. Further, a feature like automatic unlocking upon opening of the flip cover is set based on a detected opening or closing state of the flip cover.

The acceleration sensor 180E may detect magnitudes of acceleration of the terminal device 100 in all directions (usually on three axes). A magnitude and a direction of gravity may be measured and detected when the terminal device 100 is static. The acceleration sensor 180E may be further configured to identify a posture of the terminal device, and is used in an application like switching between a landscape mode and a portrait mode or a pedometer.

The distance sensor 180F is configured to measure a distance. The terminal device 100 may measure the distance by using infrared light or laser light. In some embodiments, in a photographing scenario, the terminal device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The terminal device 100 emits infrared light by using the light emitting diode. The terminal device 100 uses a photodiode to detect infrared reflected light from an object nearby. When sufficient reflected light is detected, it may be determined that there is an object near the terminal device 100. When insufficient reflected light is detected, the terminal device 100 may determine that there is no object near the terminal device 100. The terminal device 100 may detect, by using the optical proximity sensor 180G, that the user holds the terminal device 100 close to an ear to make a call, to automatically turn off the screen for power saving. The optical proximity sensor 180G may also be used in a smart cover mode or a pocket mode to automatically perform screen unlocking or locking.

The ambient light sensor 180L is configured to sense luminance of ambient light. The terminal device 100 may adaptively adjust brightness of the display 194 on the basis the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to avoid an unintentional touch.

The fingerprint sensor 180H is configured to capture a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy by using the temperature detected by the temperature sensor 180J. For example, when the temperature reported by the temperature sensor 180J exceeds a threshold, the terminal device 100 degrades performance of a processor near the temperature sensor 180J, to reduce power consumption for thermal protection. In some other embodiments, when the temperature is less than another threshold, the terminal device 100 heats the battery 142 to avoid abnormal shutdown of the terminal device 100 caused by the low temperature. In some other embodiments, when the temperature is less than still another threshold, the terminal device 100 boosts an output voltage of the battery 142 to avoid abnormal shutdown caused by the low temperature.

The touch sensor 180K is also referred to as a "touch control device". The touch sensor 180K may be disposed on the display 194, and the touch sensor 180K and the display 194 constitute a touchscreen, which is also referred to as a "touch screen". The touch sensor 180K is configured to detect a touch operation on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the terminal device 100 at a position different from a position of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may further be in contact with a human pulse and receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure pulse signal obtained by the bone conduction sensor 180M, to implement a heart rate detection function.

The button 190 includes a power button, a volume button, and the like. The button 190 may be a mechanical button, or a touch button. The terminal device 100 may receive a button input, and generate a button signal input related to user settings and function control of the terminal device 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect a SIM card. The SIM card may be inserted into the SIM card interface 195 or pulled out of the SIM card interface 195, so that the SIM card is in contact with and separated from the terminal device 100. The terminal device 100 may support one or N SIM card interfaces. N is a positive integer greater than 1. The SIM card interface 195 can support a nano-SIM card, a micro-SIM card, a SIM card, and the like. A plurality of cards may be inserted into a same SIM card interface 195 at the same time. The plurality of cards may be of a same type or different types. The SIM card interface 195 is compatible to different types of SIM cards. The SIM card interface 195 is further compatible with an external storage card. The terminal device 100 interacts with a network by using the SIM card, to implement a call function, a data communication function, and the like. In some embodiments, the terminal device 100 uses an eSIM, that is, an embedded SIM card. The eSIM card may be embedded into the terminal device 100, and cannot be separated from the terminal device 100. A software system of the terminal device 100 may use a layered architecture, an event-driven architecture, a microkernel architecture, a microservice architecture, or a cloud architecture. In embodiments of this application, an Android system of the layered architecture is used as an example to illustrate a software architecture of the terminal device 100.

Currently, for terminal devices that support a connectivity service, such as a mobile phone, a tablet computer, and a notebook computer, a user may interconnect a first terminal device and a second terminal device by using the connectivity service, so that a hardware device of the second terminal device, such as a camera, a microphone, or a speaker, is used on the first terminal device by using an application.

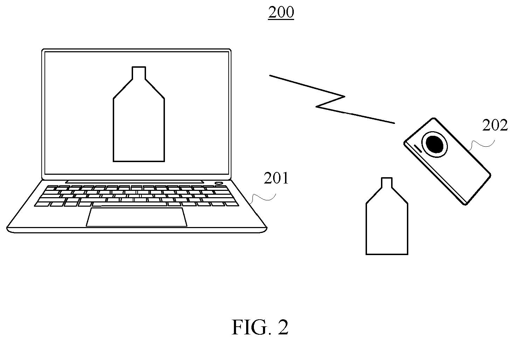

With reference to FIG. 2, the following uses an example in which the first terminal device is a notebook computer, the second terminal device is a mobile phone, and the hardware device is a camera to describe an application scenario of embodiments of this application in detail.

FIG. 2 is a diagram of an application scenario 200 according to an embodiment of this application. As shown in FIG. 2, when a user has a video meeting on a notebook computer 201 by using a video conferencing application and needs to shoot an experimental device, the user may perform device connectivity between the notebook computer 201 and a mobile phone 202, so that the notebook computer 201 and the mobile phone 202 can perform data transmission. In this way, the notebook computer 201 can call a camera of the mobile phone 202, and an experimental device video data stream shot by the camera of the mobile phone 202 may be transmitted to the notebook computer 201, to display the experimental device for another person participating in the video meeting.

Specifically, the first terminal device may currently call the hardware device of the second terminal device by using the following process: An application in the first terminal device may send a request to a preset virtual camera driver of the first terminal device, where the request is used to call a camera of the second terminal device. The first terminal device obtains, based on the request, video data shot by the camera of the second terminal device.

However, the virtual camera driver of the first terminal device is preset. Therefore, a data amount of a camera that can be recognized by the first terminal device is fixed. When a quantity of cameras included in the second terminal device is greater than a quantity of virtual camera drivers, the first terminal device cannot fully recognize all cameras of the second terminal device. The first terminal device cannot call, through the virtual camera driver, a hardware device of the second terminal device other than the camera, for example, a microphone and a speaker. In addition, when the first terminal device does not need to call the camera of the second terminal device, the virtual camera driver is not deleted. It can be learned that this hardware device calling method is less compatible, scalable, and flexible.

To resolve the foregoing technical problem, this application provides a hardware device calling method, applied to a system including a first terminal device and a second terminal device, where a user logs in to a same account on the first terminal device and the second terminal device, a wireless fidelity WiFi switch and a Bluetooth switch of each of the first terminal device and the second terminal device are both in an on state. A virtual bus driver is installed in the first terminal device. When the first terminal device detects the second terminal device, the first terminal device obtains hardware device information of the hardware device of the second terminal device; the first terminal device may create, based on hardware device information of each hardware device through the virtual bus driver, a virtual device driver corresponding to each hardware device; and then, when the first terminal device needs to call a hardware device of the second terminal device, the first terminal device can obtain a data stream from the second terminal device through a virtual device driver corresponding to the hardware device. It can be learned that the first terminal device may dynamically create virtual device drivers based on a type of a hardware device and a quantity of hardware devices of the second terminal device through the virtual bus driver. When the first terminal device calls a hardware device other than the camera of the second terminal device, there is no need to newly develop a virtual device driver of the hardware device other than the camera, improving scalability of the hardware device calling method. In addition, the virtual bus driver may create a virtual device driver corresponding to any USB hardware device, so that the first terminal device can call a plurality of types of USB hardware devices, improving compatibility of the hardware device calling method. Moreover, when the first terminal device does not need to call the hardware device of the second terminal device, the first terminal device may further delete the virtual device driver through the virtual bus driver, and may delete the virtual bus driver, improving flexibility of the hardware device calling method.

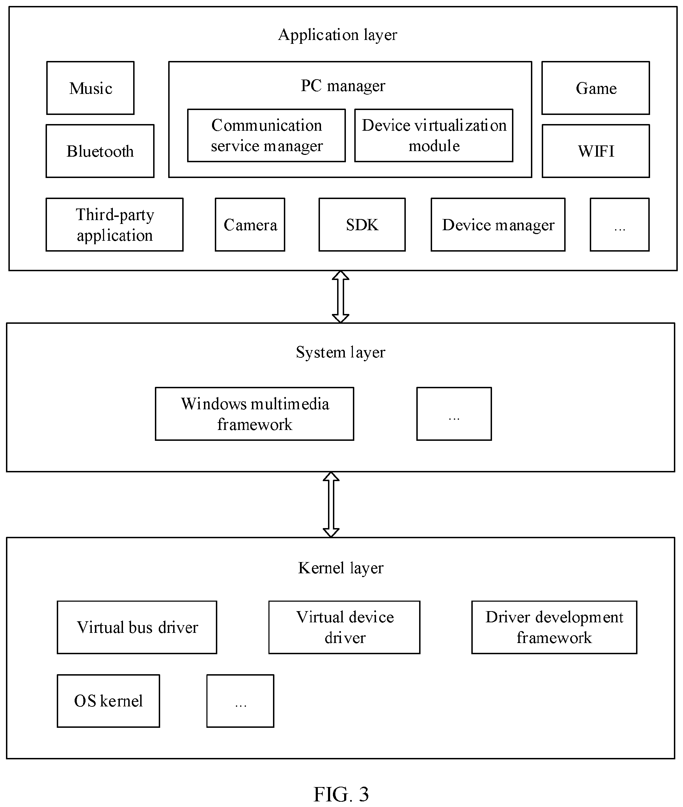

The following describes in detail a software structure to which the hardware device calling method according to an embodiment of this application is applicable with reference to FIG. 3.

FIG. 3 is a block diagram of a software structure of a Windows system of the terminal device 100 according to an embodiment of this application, where an example in which a terminal device 100 is a personal computer (personal computer, PC) is used.

As shown in FIG. 3, in a layered architecture of the Windows system, software is divided into several layers, and each layer has a clear role and task. The layers communicate with each other through software interfaces. For example, an application layer may interact with a system layer through an application programming interface (application programming interface, API), and the system layer may interact with a kernel layer through a standard I/O interface. In some embodiments, the Windows system is divided into three layers: the application layer, the system layer, and the kernel layer from top to bottom. The following separately explains a specific functional module included in each layer.

### 1. Application layer

The application layer may include a series of applications, such as music, PC manager, Bluetooth, WLAN, game, videos, third-party application, camera, software development kit (software development kit, SDK), communication service manager, device virtualization module, and device manager. For example, in this embodiment of this application, in the application layer, the application may access a device virtualization SDK, and call the device virtualization module in the system layer by using the device virtualization SDK.

The PC manager may include installation packages of a plurality of applications, and a user may install the plurality of applications for the terminal device 100 through the PC manager. The PC manager is further used to implement functions such as system optimization, intelligent audiovisual, intelligent device connectivity, multi-screen collaboration, and hotspot sharing. The PC manager may also have another name. This is not specifically limited in this application.

Optionally, the PC manager includes a communication service manager and the device virtualization module, and the PC manager implements services such as intelligent connectivity through the communication service manager.

The third-party application may include a social application and an office application.

The communication service manager can implement data transmission between devices. For example, in this embodiment of this application, the communication service manager may implement security authentication and account authentication of devices with a same account, device self-discovery and ad hoc networking, data transmission between devices, access to a communication service, and the like.

The communication service manager may also be referred to as an intelligent connectivity module, magiclink, or the like. This is not specifically limited in this application.

The device virtualization module is configured to manage a lifecycle of a virtual device driver, and control creation and deletion of the virtual device driver through the virtual bus driver (also referred to as insertion and removal of the virtual device driver). The device virtualization module is further configured to process a request sent by an application to the virtual device driver, and feed back a processing result to the application. The device virtualization module may interact with another application by using the device virtualization SDK of the application layer.

The device virtualization module may also be referred to as a hardware service cross-device sharing module, a distributed mobile sensing development platform (distribute mobile sensing development platform, DMSDP), and a hardware virtualization module. This is not specifically limited in this application. Correspondingly, the device virtualization SDK may also be a hardware service cross-device sharing SDK, a DMSDP SDK, a hardware virtualization SDK, or the like. This is not limited in this embodiment of this application either.

The device manager is used to view and change a device attribute, change a device driver, configure device setting, and uninstall a device.

### 2. System layer

The system layer may include a Windows multimedia framework, and the like, and may provide a corresponding service for execution of a user application process.

The Windows multimedia framework includes a plurality of Windows functions that can be called by an application, and is used to develop the application. The Windows multimedia framework is further used to connect the application layer and the kernel layer to implement interaction between the application layer and the kernel layer. For example, a request sent by an application to the kernel layer may be first transmitted to the Windows multimedia framework by using a framework (framwork, FWK) API, and then transmitted to the kernel layer by using the standard I/O interaction interface.

### 3. Kernel layer

The kernel layer is a layer between hardware and software. The kernel layer is used to drive the hardware, to enable the hardware to work. The kernel layer may include a virtual bus driver, a virtual device driver, a driver development framework (windows driver foundation, WDF) module, an operating system (operating system, OS) kernel (kernel), and the like.

The virtual device driver may be recognized by the terminal device as a universal serial bus (universal serial bus, USB) device, and used by the terminal device, for example, a virtual camera (camera) device, and a virtual microphone (mic) device. If the terminal device 100 recognizes an available USB device (also referred to as a hardware device), the terminal device 100 may create a corresponding virtual device driver for each USB device, and a plurality of virtual device drivers may be included in the kernel layer of the terminal device 100. If the terminal device 100 does not recognize the available USB device, there is no virtual device driver included in the kernel layer of the terminal device 100. When the terminal device 100 creates at least one virtual device driver, the device manager of the terminal device 100 can display the at least one virtual device driver.

The virtual bus driver is used to create or delete the virtual device driver, that is, to manage insertion, removal and communication processes of the virtual device driver.

Optionally, the PC manager can call an installation script and an installation package of the virtual bus driver, to install the virtual bus driver.

The virtual bus driver may also be referred to as a virtual bus controller, a virtual driver bus, or the like. This is not specifically limited in this application.

The OS kernel is used to convert a request from the application layer into a data processing instruction, and send the request to the virtual device driver by using the driver development framework.

The driver development framework is used to send the data processing instruction from the OS kernel to the virtual device driver.

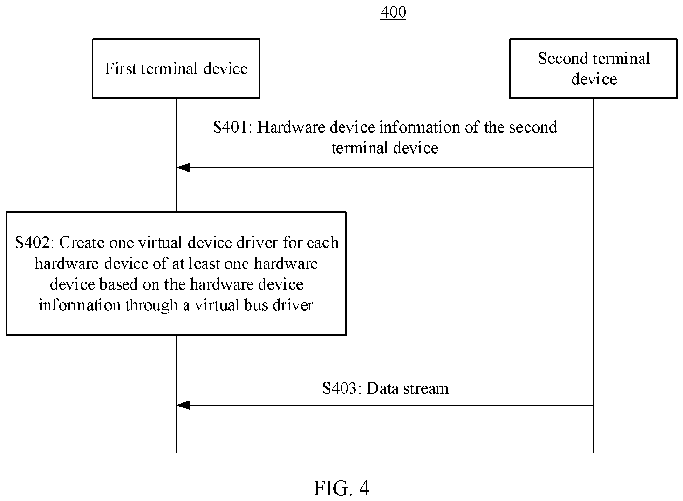

The following describes hardware device calling methods in this application in detail with reference to FIG. 4 to FIG. 11. Embodiments shown in this application show the hardware device calling methods provided in this application from a perspective of device interaction. Specific forms and quantities of devices shown are merely examples, and shall not constitute any limitation on implementation of the methods provided in this application. The following uses examples in which the methods are performed by a first terminal device and a second terminal device to describe the hardware device calling methods in embodiments of this application in detail.

It should be understood that a terminal device may be the terminal device, may be a chip, a chip system, or a processor that supports the terminal device in implementing the hardware device calling methods, or may be a logic module or software that can implement all or some of functions of the terminal device. This is not specifically limited in this application.

FIG. 4 is a schematic flowchart of a hardware device calling method 400 according to an embodiment of this application. The method 400 is applied to a system including a first terminal device and a second terminal device, where a user logs in to a same account on the first terminal device and the second terminal device, a wireless fidelity (WiFi) switch and a Bluetooth switch of each of the first terminal device and the second terminal device are both in an on state. A hardware structure of the first terminal device may be shown in FIG. 1, and a software structure may be shown in FIG. 3.

It should be understood that an account may mean personal registration accounts provided by different terminal device brands that are used to ensure user device security. After the first terminal device and the second terminal device are logged in to the same account, data sharing between devices may be implemented. When the first terminal device and the second terminal device are logged in to the same account, and the WiFi switch and the Bluetooth switch of each of the first terminal device and the second terminal device are both in an on state, the first terminal device can detect the second terminal device.

The method 400 includes the following steps:
S401: When detecting the second terminal device, obtain hardware device information of the second terminal device, where the hardware device information includes device identification information of the second terminal device, type identification information of at least one hardware device of the second terminal device, and hardware device capability information of the at least one hardware device.

Optionally, before S401, the first terminal device may install a virtual bus driver, where the virtual bus driver is used to manage a virtual device driver.

Specifically, the first terminal device may send, to the second terminal device, a request used to request the hardware device information of the second terminal device. The second terminal device may send the hardware device information of the second terminal device to the first terminal device based on the request.

The device identification information may be any information indicating the second terminal device, such as a device type, a device model, or a device ID. For example, the device identification information is a device model, for example, H90. Herein, H90 indicates that the second terminal device is a mobile phone, and a mobile phone model is H90. The device identification information may alternatively be a device name set by a user for the second terminal device, for example, a mobile phone of Zhang San. The type identification information indicates a type of the at least one hardware device included in the second terminal device. The hardware device may be a device like a camera, a microphone, or a speaker. Different type identification information may respectively correspond to different hardware devices. For example, the type identification information includes 0 and 1, where 0 may indicate a camera of the second terminal device, and 1 may indicate a microphone of the second terminal device. Different type identification information may respectively correspond to different hardware devices of a same type. For example, the type identification information includes A and B, where A may indicate a front-facing camera of the second terminal device, and B may indicate a rear-facing camera of the second terminal device. The hardware device capability information may include at least one type of information indicating performance of the hardware device. For example, the hardware device is a camera, and hardware device capability information of the camera may include information such as resolution, magnification, or a frame rate that is supported by the camera.

S402: Create one virtual device driver for each hardware device of the at least one hardware device based on the hardware device information through a virtual bus driver, where the virtual bus driver is used to manage the virtual device driver.

It should be understood that the first terminal device may determine, based on the hardware device information, a quantity of hardware devices, a type of a hardware device, and a hardware device capability of a hardware device included in the second terminal device. In this way, the first terminal device may create the corresponding virtual device driver for each hardware device based on hardware device information of each hardware device of the at least one hardware device. Each hardware device of the second terminal device corresponds to one virtual device driver.

S403: When detecting a message request of calling a first hardware device of the at least one hardware device by a first application through a first virtual device driver, the first terminal device receives a data stream from the second terminal device over a data channel, where the first virtual device driver is created by the virtual bus driver based on hardware device information of the first hardware device.

It should be understood that the first application may be a third-party application, or may be a system application. The first hardware device may be any hardware device that is in the second terminal device and that can be used by the first terminal device, for example, may be the front-facing camera of the second terminal device. The hardware device information of the first hardware device includes the device identification information of the second terminal device, type identification information of the first hardware device, and hardware device capability information of the first hardware device. The first terminal device may create, based on the hardware device information of the first hardware device through the virtual bus driver, a first virtual device driver whose attribute is the same as that of the first hardware device. The data channel may be understood as a channel that can be used to implement data stream transmission between the first terminal device and the second terminal device. For example, a peer-to-peer (peer-to-peer, P2P) connection is established between the first terminal device and the second terminal device, and the data channel may be the P2P connection.

In a possible implementation, before S403, the method 400 further includes: The first terminal device creates the data channel. The creating the data channel may be understood as establishing a P2P connection.

According to the hardware device calling method of this application, when the first terminal device detects the second terminal device, the first terminal device may obtain the hardware device information of the hardware device of the second terminal device; the first terminal device may create, based on the hardware device information of each hardware device through the virtual bus driver, the virtual device driver corresponding to each hardware device; and then, when the first terminal device needs to call a hardware device of the second terminal device, the first terminal device may obtain the data stream from the second terminal device through a virtual device driver corresponding to the hardware device. It can be learned that the first terminal device may dynamically create virtual device drivers with different attributes based on a type of a hardware device and a quantity of hardware devices of the second terminal device through the virtual bus driver. In this way, when the first terminal device calls a hardware device other than the camera of the second terminal device, there is no need to newly develop a virtual device driver of the hardware device other than the camera, improving scalability of the hardware device calling method. In addition, the virtual bus driver may create a virtual device driver corresponding to any USB hardware device, so that the first terminal device can call a plurality of types of USB hardware devices, improving compatibility of the hardware device calling method. Moreover, the first terminal device may create a corresponding quantity of virtual device drivers based on the quantity of hardware devices of the second terminal device, and when the first terminal device does not need to call the hardware device of the second terminal device, the first terminal device may further delete the virtual device driver through the virtual bus driver, and may delete the virtual bus driver, improving flexibility of the hardware device calling method.

In an optional embodiment, the first terminal device includes an application layer and a kernel layer; the application layer includes the first application, a first device virtualization module, and a first communication service manager, where the first device virtualization module is configured to control creation and deletion of the virtual device driver and processes a request from an application, and the first communication service manager is used for data transmission between devices; and the kernel layer includes the virtual bus driver, the virtual device driver, and a driver development framework.

It should be understood that for a software structure of the first terminal device, reference may be made to FIG. 3. The first application may be a third-party application or a system application of the application layer. The first device virtualization module may be the device virtualization module in FIG. 3. The first communication service manager may be the communication service manager in FIG. 3. There may be no virtual device driver or a plurality of virtual device drivers. When there are a plurality of virtual device drivers, attributes of any two of the plurality of virtual device drivers may be different.

In a possible implementation, that the first terminal device creates the data channel includes: The first device virtualization module creates the data channel.

As an optional embodiment, S401 may be specifically implemented in the following manner: The first device virtualization module obtains the hardware device information. S402 may be specifically implemented in the following manner: The first device virtualization module creates, through the virtual bus driver, a virtual device driver corresponding to attributes indicated by type identification information, device identification information, and hardware device capability information of each hardware device.

It should be understood that the first device virtualization module may be configured to implement data transmission between the first terminal device and the second terminal device, and can control the virtual bus driver to create the virtual device driver. The first terminal device can obtain the hardware device information from the second terminal device by using the first virtualization module, and control, by using the first virtualization module, the virtual bus driver to create or delete the virtual device driver.

In a possible implementation, the creating a virtual device driver corresponding to attributes indicated by type identification information, device identification information, and hardware device capability information of each hardware device includes: The first device virtualization module converts the type identification information and the device identification information of each hardware device into a hardware device type descriptor in a universal serial bus USB protocol, and converts the hardware device capability information of each hardware device into a hardware device configuration descriptor in the USB protocol; the first device virtualization module transmits the hardware device type descriptor and the hardware device configuration descriptor to the virtual bus driver; and the virtual bus driver creates the virtual device driver corresponding to the hardware device type descriptor and the hardware device configuration descriptor.

It should be understood that each available hardware device of the second terminal device may be recognized as one USB device by the first terminal device, and the first device virtualization module needs to create the corresponding virtual device driver for each hardware device of the second terminal device. The hardware device type descriptor may be understood as a device descriptor, and the hardware device configuration descriptor may be understood as a configuration descriptor. In addition to the hardware device type descriptor and the hardware device configuration descriptor, the first device virtualization module may further configure another type of descriptor, for example, a character string descriptor, for each hardware device. The virtual bus driver can create a virtual device driver corresponding to each hardware device descriptor.

It should be understood that the hardware device type descriptor may include information other than a descriptor corresponding to the type identification information and the device identification information. The hardware device configuration descriptor may include information other than a descriptor corresponding to the hardware device capability information. This is not specifically limited in this application.

In a possible implementation, the second terminal device includes a second communication service manager, and the first communication service manager and the second communication service manager are used to implement data transmission between the first terminal device and the second terminal device; and that the first device virtualization module obtains the hardware device information includes: The first device virtualization module establishes a control channel; the first communication service manager sends a first request to the second communication service manager over the control channel, where the first request is used to request the hardware device information; the first communication service manager receives the hardware device information from the second communication service manager; and the first communication service manager transmits the hardware device information to the first device virtualization module.

It should be understood that the second terminal device may be a terminal device such as a mobile phone or a tablet computer. The second terminal device may be equipped with an Android system, and a software structure of the second terminal device may include an application layer and an application framework layer. The application framework layer of the second terminal device may include the second communication service manager. The control channel may be a data transmission channel used to transmit a control request.

In a possible implementation, the control channel is created by establishing a P2P connection or a Bluetooth connection between the first terminal device and the second terminal device.

In a possible implementation, the control channel is first created by establishing the P2P connection between the first terminal device and the second terminal device. When the P2P connection cannot be established between the first terminal device and the second terminal device, the control channel establishes the Bluetooth connection between the first terminal device and the second terminal device.

In a possible implementation, after the first communication service manager transmits the hardware device information to the first device virtualization module, the method 400 further includes: The first device virtualization module deletes the control channel.

It should be understood that when a control request needs to be transmitted between the first terminal device and the second terminal device, for example, the first terminal device needs to obtain the hardware device information of the second terminal device by using the device virtualization module, the first device virtualization module may create the control channel; or when the first terminal device does not need to send the control request to the second terminal device, the first device virtualization module may delete the control channel. For example, after the first terminal device creates the virtual device driver corresponding to each hardware device of the second terminal device, the first device virtualization module may determine that the first terminal device does not need to send the control request to the second terminal device in a specific time period, and may delete the control channel.

In a possible implementation, after the virtual device driver is created, the first device virtualization module deletes the control channel after waiting for preset duration.

It should be understood that the control channel is deleted with a delay. The deleting the control channel may also be understood as destroying the control channel.

In a possible implementation, that the first device virtualization module establishes a control channel includes: When the hardware device information is not capable of being read from a cloud server, the first device virtualization module establishes the control channel.

It should be understood that when the hardware device information of the second terminal device is stored in the cloud server, the first terminal device may directly obtain the hardware device information from the cloud server; or when the cloud server does not store the hardware device information of the second terminal device, the first terminal device needs to obtain the hardware device information from the second terminal device. In this case, the first terminal device needs the second terminal device to send the control request used to request the hardware device information. Therefore, the first device virtualization module establishes the control channel.

As an optional embodiment, S401 is specifically implemented in the following manner: reading the hardware device information from the cloud server.

It should be understood that when the hardware device information of the second terminal device is stored in the cloud server, the first terminal device may directly obtain the hardware device information from the cloud server. This can improve efficiency of obtaining the hardware device information of the second terminal device by the first terminal device.

In a possible implementation, when the terminal device obtains the hardware device information from the second terminal device, the second terminal device transmits the hardware device information to the cloud server.

It should be understood that the terminal device may be the first terminal device, or another terminal device. When the terminal device obtains the hardware device information from the second terminal device at a historical moment, the second terminal device may determine that the terminal device needs to obtain the hardware device information. Therefore, the second terminal device may upload the hardware device information to the cloud server.

In an optional embodiment, the method 400 further includes: When detecting that a buffer message queue corresponding to the first virtual device driver changes, the first device virtualization module reads a second request from the buffer message queue, where the second request is used to request to obtain the data stream; and that the first terminal device receives a data stream from the second terminal device over a data channel includes: The first device virtualization module sends the data stream to the virtual bus driver based on the second request; and the virtual bus driver matches the data stream with the second request in the buffer message queue and performs encapsulation to obtain an encapsulated data packet, and feeds back the encapsulated data packet to the first application.

It should be understood that the first device virtualization module may monitor, in real time, a buffer message queue corresponding to each virtual device driver. When the buffer message queue corresponding to the first virtual device driver changes, the first device virtualization module may read a request in the buffer message queue corresponding to the first virtual device driver. The second request may be a data request, and is used to request to transmit a data stream, for example, to transmit video data or audio data. The buffer message queue is a message queue used to buffer a message request related to the first virtual device driver. The buffer message queue may include a plurality of requests. Therefore, when receiving the data stream from the first device virtualization module, the virtual bus driver needs to match the corresponding second request in the buffer message queue with the data stream, and encapsulate the second request and the data stream.

In a possible implementation, when the first application sends a control request, the kernel layer of the first terminal device creates a control endpoint, the control endpoint may buffer a control message queue, and the control message queue may include a plurality of control requests; and when the first application sends a data request, the kernel layer of the first terminal device creates a data endpoint, the data endpoint may buffer a data message queue, and the data message queue may include a plurality of control requests. The control endpoint may buffer a received control request in the buffer message queue, and the data endpoint may buffer a received data request in the buffer message queue.

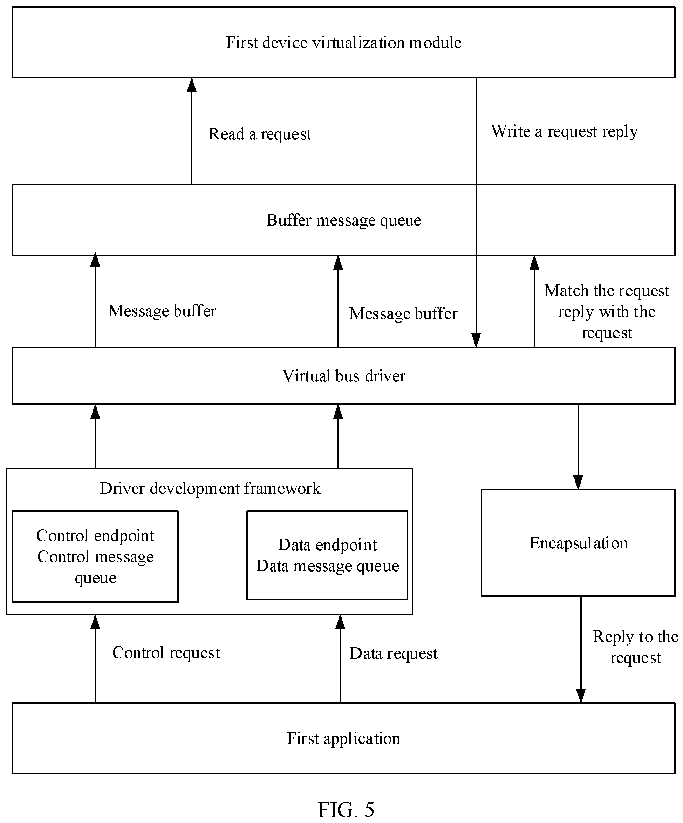

FIG. 5 is a diagram of a process in which a first application obtains a data stream or hardware device information according to an embodiment of this application. As shown in FIG. 5, when the driver development framework detects a control request from the first application, the driver development framework creates a control endpoint; and when the driver development framework detects a data request from the first application, the driver development framework creates a data endpoint. The control endpoint includes a control message queue. The data endpoint includes a data message queue. When a request sent by the first application is a control request, for example, the first request, and the driver development framework detects that the control message queue changes, the first request is buffered in the buffer message queue through the virtual bus driver. When a request sent by the first application is a data request, for example, the second request, and the driver development framework detects that the data message queue changes, the second request is buffered in the buffer message queue through the virtual bus driver. When detecting that the buffer message queue changes, the first device virtualization module reads a request in the buffer message queue, for example, the first request and the second request. The first device virtualization module processes the read request, and sends a request reply to the virtual bus driver. When the request read by the first device virtualization module is the first request, the request reply may be the hardware device information of the second terminal device. When the request read by the first device virtualization module is the second request, the request reply may be a data stream. The virtual bus driver matches the request reply with the request in the buffer message queue and performs encapsulation to obtain an encapsulated data packet, for example, matches the hardware device information with the first request and performs encapsulation, and matches the data stream with the second request and performs encapsulation. Then the virtual bus driver replies to the request of the first application, that is, feeds back the encapsulated data packet to the first application.

In an optional embodiment, the method 400 further includes: When detecting that the second terminal device is offline, the first terminal device deletes, through the virtual bus driver, a virtual device driver corresponding to the at least one hardware device, where the second terminal device being offline indicates that a WiFi switch and/or a Bluetooth switch of at least one device of the first terminal device and the second terminal device are/is in an off state, or the first terminal device and the second terminal device are not logged in to a same account.

It should be understood that if the second terminal device is offline, the first terminal device cannot continue to detect the second terminal device. Therefore, the first terminal device cannot continue to call the hardware device of the second terminal device, and the first terminal device may delete, through the virtual bus driver, the virtual device driver corresponding to the at least one hardware device. That the WiFi switch and/or the Bluetooth switch of the at least one device of the first terminal device and the second terminal device are/is in an off state may mean that the WiFi switch and/or the Bluetooth switch of the at least one device of the first terminal device and the second terminal device are/is switched from the on state to the off state. That the first terminal device and the second terminal device are not logged in to the same account may be understood as that the account logged in to the first terminal device and/or the second terminal device is offline.

In a possible implementation, that the first terminal device deletes, through the virtual bus driver, a virtual device driver corresponding to the at least one hardware device includes: The first communication service manager detects that the second terminal device is offline, and notifies the first device virtualization module to delete the virtual device driver corresponding to the at least one hardware device; the first device virtualization module transmits, to the virtual bus driver, a deletion message of the virtual device driver corresponding to the at least one hardware device; and the virtual bus driver deletes, based on the deletion message, the virtual device driver corresponding to the at least one hardware device.

It should be understood that the first terminal device and the second terminal device implement connectivity through the first communication service manager and the second communication service manager. When the first communication service manager cannot be connected to the second communication service manager, the first communication service manager may determine that the second terminal device is offline. When the second terminal device is offline, the first communication service manager sends, to the first device virtualization module, a message indicating to delete the virtual device driver corresponding to the at least one hardware device. The first device virtualization module controls, based on the message, the virtual bus driver to delete the virtual device driver corresponding to the at least one hardware device.

In a possible implementation, that the virtual bus driver deletes, based on the deletion message, the virtual device driver corresponding to the at least one hardware device includes: The virtual bus driver deletes, based on the deletion message, a descriptor corresponding to the at least one hardware device, where the descriptor includes a hardware device type descriptor and a hardware device configuration descriptor.

As an optional embodiment, S401 may be specifically implemented in the following manner: when a first switch key on a setting interface of the first terminal device and a second switch key on a setting interface of the second terminal device are in an on state, obtaining the hardware device information, where the first switch key is used by the user to choose to enable or disable a function of calling a hardware device, and the second switch key is used by the user to choose to enable or disable a called function of the hardware device.

It should be understood that a setting interface may be a system setting interface of a terminal device, or a setting interface of an application of the terminal device. When the first switch key and the second switch key are both in an on state, the first terminal device can call the hardware device of the second terminal device.

In an optional embodiment, the method 400 further includes: When the first switch key and/or the second switch key are/is switched from the on state to an off state, the first terminal device deletes, through the virtual bus driver, the virtual device driver corresponding to the at least one hardware device.

It should be understood that when the first switch key and/or the second switch key are/is switched from the on state to the off state, the first terminal device cannot continue to call the hardware device of the second terminal device, and therefore the first terminal device may delete, through the virtual bus driver, the virtual device driver corresponding to the at least one hardware device.

In an optional embodiment, the method 400 further includes: The first terminal device displays the setting interface, where the setting interface includes the first switch key; and adjusts the first switch key to the on state or the off state based on a selection operation performed by the user on the first switch key.

It should be understood that the selection operation may be a tap operation, a slide operation, or the like, and the selection operation of the user can switch a status of the first switch key.

In an optional embodiment, the first terminal device includes a second application; and that the first terminal device installs the virtual bus driver includes: The first terminal device installs the virtual bus driver by using the second application.

It should be understood that the second application can call an installation script and an installation package of the virtual bus driver, to install the virtual bus driver. For example, the second application may be a PC manager shown in FIG. 3.

In a possible implementation, when the first terminal device installs the second application, the second application calls the installation script and the installation package of the virtual bus driver, to install the virtual bus driver.

In a possible implementation, the user installs the virtual bus driver through the installation package of the virtual bus driver.

As an optional embodiment, before S401, the method 400 further includes: The first terminal device detects whether a call condition of the hardware device is met, where the call condition includes at least one of the following: a device type of the second terminal device is a preset type; the first terminal device supports a capability of calling the hardware device; or a function of calling the hardware device by the first terminal device is in an on state; and the obtaining hardware device information of the second terminal device includes: obtaining the hardware device information when the call condition is met.

It should be understood that, when the first terminal device finds the second terminal device, the first terminal device can obtain the device type of the second terminal device. The preset type may include a mobile phone, a tablet computer, or the like. The first terminal device can call a hardware device of a second terminal device of a preset type. That the first terminal device supports the capability of calling the hardware device may be understood as that the virtual bus driver is installed in the first terminal device. That the function of calling the hardware device by the first terminal device is in an on state may be understood as that the first switch key is in an on state.

In an optional embodiment, the at least one hardware device includes a camera and/or a microphone.

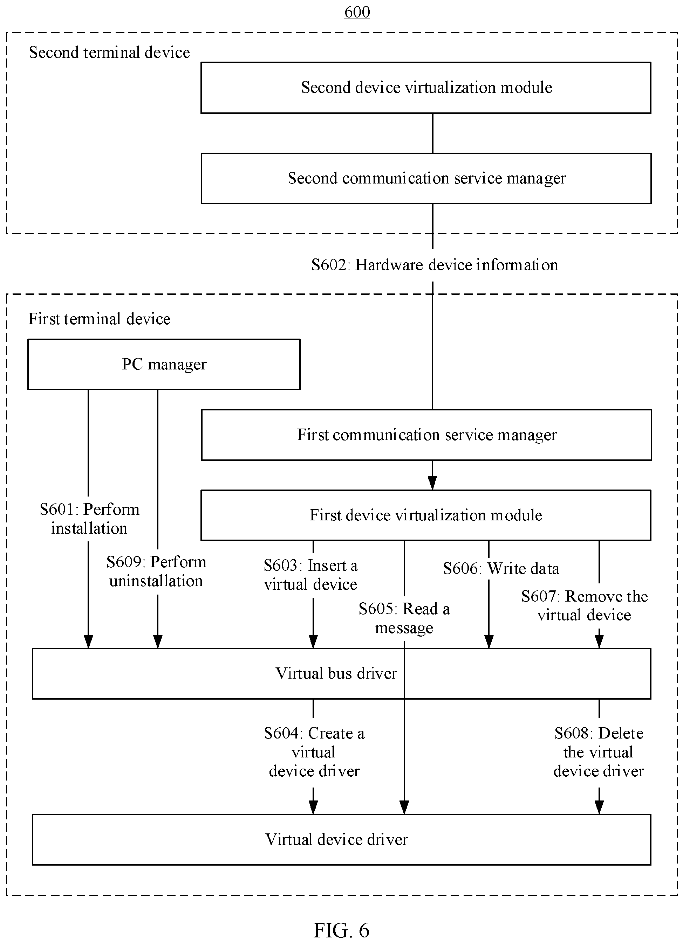

FIG. 6 is a schematic flowchart of a hardware device calling method 600 according to an embodiment of this application. As shown in FIG. 6, the method 600 is applied to a system including a first terminal device and a second terminal device, where a user logs in to a same account on the first terminal device and the second terminal device, a WiFi switch and a Bluetooth switch of each of the first terminal device and the second terminal device are both in an on state.

A hardware structure of the first terminal device may be shown in FIG. 1, and a software structure may be shown in FIG. 3. A hardware structure of the second terminal device may be shown in FIG. 1. A software structure of the second terminal device includes a second communication service manager and a second device virtualization module. The second device virtualization module is configured to interact with a camera API of the first terminal device, and may enable or disable a camera of the first terminal device, obtain video data shot by the camera, and process the video data, for example, perform encoding and decoding on an image. The second device virtualization module is further configured to: manage a control channel and a data channel, where the data channel is used to transmit a data stream, and interact with an application of the second terminal device, to trigger pause, resume, and disabling of a virtual camera.

The method 600 includes the following steps:
S601: APC manager installs a virtual bus driver.
S602: A first device virtualization module obtains hardware device information of the second terminal device from the second device virtualization module.

Specifically, the second device virtualization module sends the hardware device information to the second communication service manager. The second communication service manager sends the hardware device information to a first communication service manager. The first communication service manager sends the hardware device information to the first device virtualization module.

S603: The first device virtualization module notifies the virtual bus driver to insert a virtual device. It may be understood that the first device virtualization module writes a descriptor corresponding to a hardware device to the virtual bus driver.

S604: The virtual bus driver creates one virtual device driver for each hardware device of the second terminal device.

S605: The first device virtualization module reads, through the virtual bus driver, a message in a buffer message queue corresponding to the virtual device driver.

S606: The first device virtualization module writes data to the virtual bus driver.

It should be understood that the data may be understood as the hardware device information.

S607: When the second terminal device is offline or the first terminal device does not need to call the hardware device of the second terminal device, the first device virtualization module notifies the virtual bus driver to remove the virtual device. It may be understood that the first device virtualization module sends a deletion message to the virtual bus driver.

S608: The virtual bus driver deletes the virtual device driver.

S609: Uninstall the virtual bus driver through the PC manager.

It should be understood that when needing to delete the virtual bus driver, the user may delete the virtual bus driver through the PC manager.

It should be understood that specific implementations from S601 to S609 are similar to steps in the method 400. For details, reference may be made to the foregoing descriptions. Details are not described herein again.

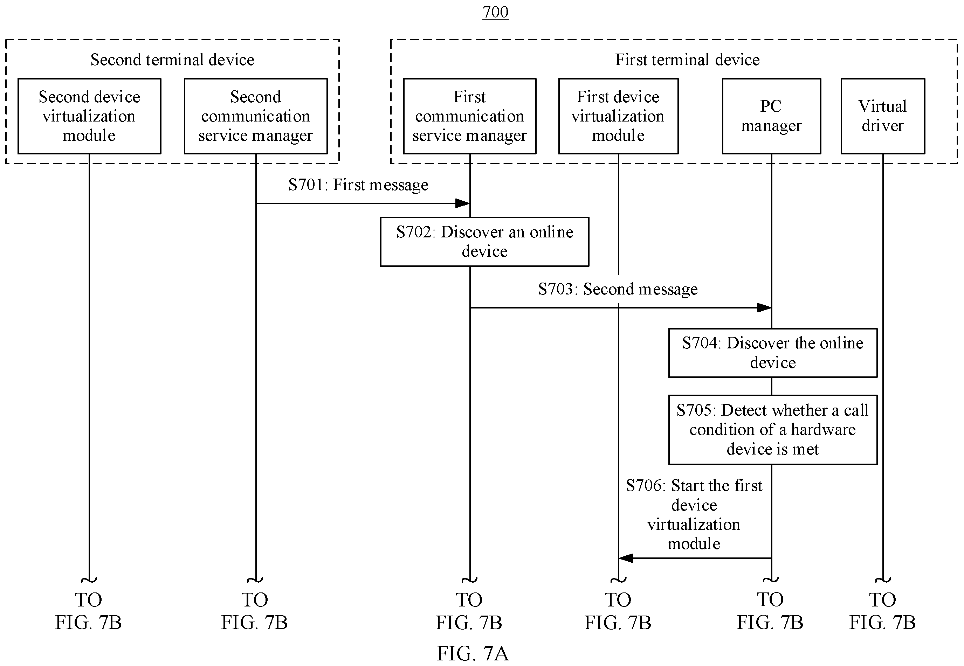

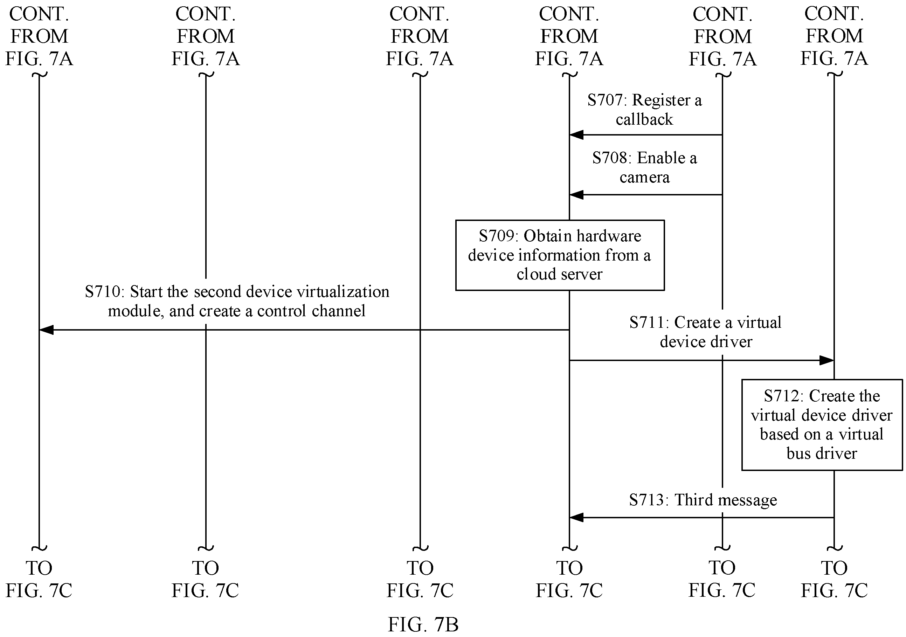

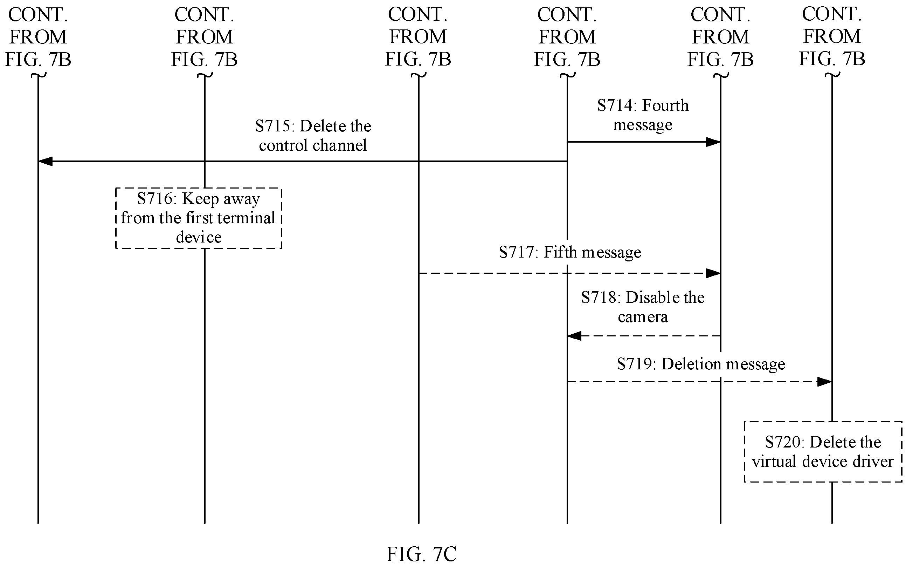

With reference to FIG. 7A to FIG. 7C, the following uses an example in which a hardware device is a camera to describe a hardware device calling method in detail.

FIG. 7A to FIG. 7C are a schematic flowchart of a hardware device calling method 700 according to an embodiment of this application. As shown in FIG. 7A to FIG. 7C, the method 700 is applied to a system including a first terminal device and a second terminal device, where a user logs in to a same account on the first terminal device and the second terminal device, a WiFi switch and a Bluetooth switch of each of the first terminal device and the second terminal device are both in an on state.

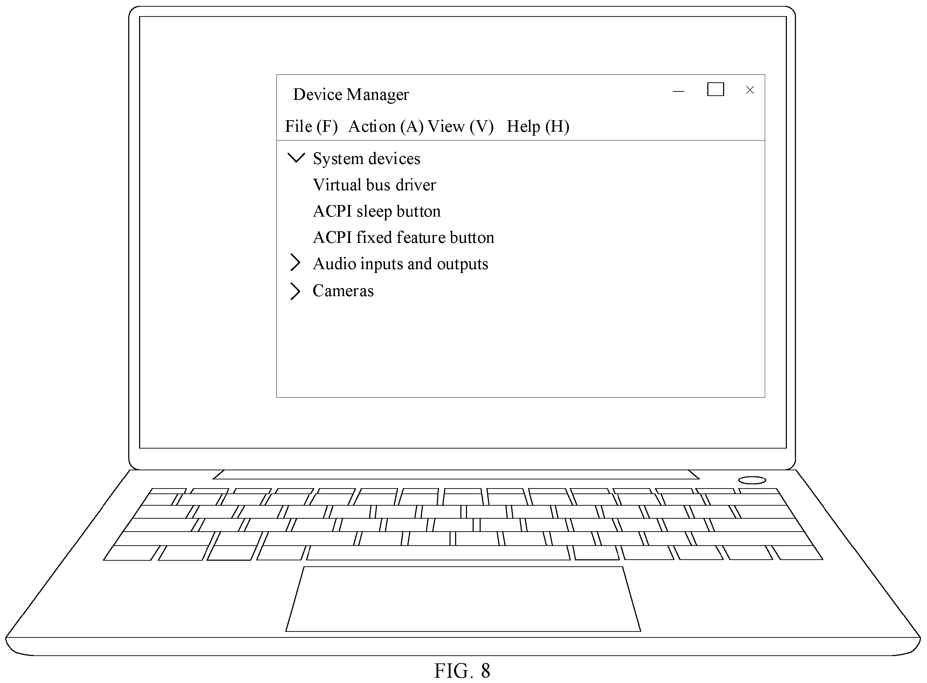

A hardware structure of the first terminal device may be shown in FIG. 1, and a software structure may be shown in FIG. 3. A virtual bus driver of the first terminal device may be installed through a PC manager. After the virtual bus driver is installed through the PC manager, a device manager of the first terminal device can display the virtual bus driver. For example, as shown in FIG. 8, the first terminal device is a notebook computer, and a system device of a device manager in the notebook computer includes a virtual bus driver.

A hardware structure of the second terminal device may be shown in FIG. 1. A software structure of the second terminal device includes a second communication service manager and a second device virtualization module. The second device virtualization module is configured to interact with a camera API of the first terminal device, and may enable or disable a camera of the first terminal device, obtain video data shot by the camera, and process the video data, for example, perform encoding and decoding on an image. The second device virtualization module is further configured to: manage a control channel and a data channel, where the data channel is used to transmit a data stream, and interact with an application of the second terminal device, to trigger pause, resume, and disabling of a virtual camera.

The method 700 includes the following steps:
S701: The second communication service manager sends a first message to a first communication service manager, where the first message is used to notify the first communication service manager that the second terminal device is online. Correspondingly, the first communication service manager receives the first message from the second communication service manager.

Optionally, when the second terminal device approaches the first terminal device, so that a distance between the second terminal device and the first terminal device is less than a preset distance, the second communication service manager sends the first message to the first communication service manager.

S702: The first communication service manager discovers an online device based on the first message. The online device may be understood as the second terminal device.

S703: The first communication service manager sends a second message to an application, where the second message is used to notify the application that the second terminal device is online. Correspondingly, the application receives the second message from the first communication service manager.

It should be understood that the second message may include information such as a device type and a device model of the second terminal device. The application may be the PC manager in FIG. 3.

S704: The PC manager discovers an online device based on the second message.

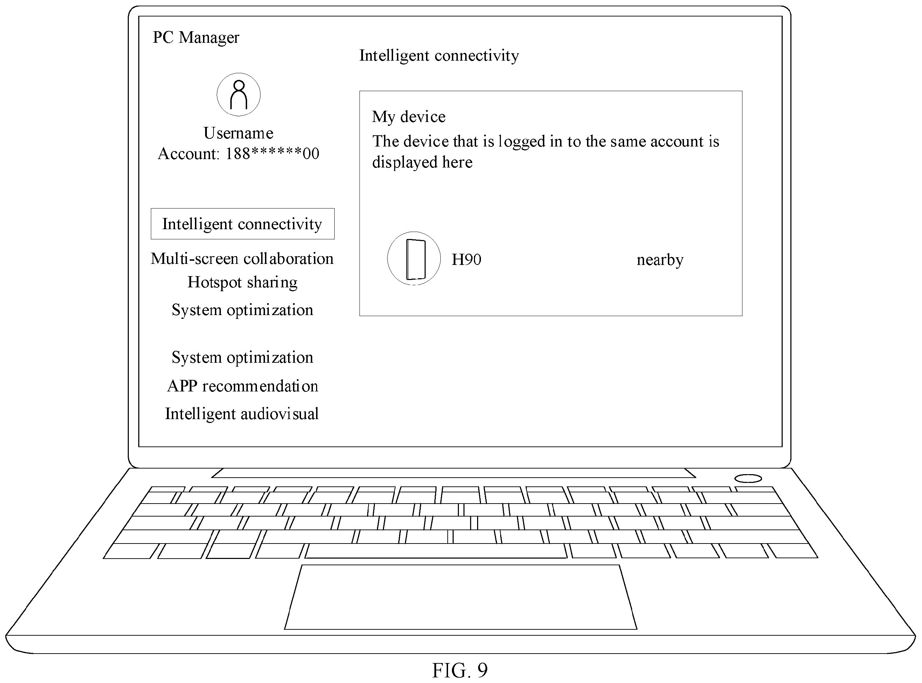

Optionally, the PC manager may discover the online device based on intelligent connectivity. When the PC manager may discover the second terminal device based on the intelligent connectivity, the first terminal device displays a second interface, and the second interface includes the device type and the device model of the second terminal device. For example, the first terminal device is a notebook computer, the device model of the second terminal device is H90, the device type of the second terminal device is a mobile phone, and the second interface may be shown in FIG. 9.

S705: The PC manager detects whether a call condition of a hardware device is met.

It should be understood that the PC manager can detect whether the first terminal device and/or the second terminal device meet/meets the call condition of the hardware device. For example, the PC manager detects whether a device type of the first terminal device is a preset type, detects whether the first terminal device and/or the second terminal device support/supports a capability of a virtual camera, and detects whether a first switch key and a second switch key are in an on state, or the like.

When the first terminal device and the second terminal device meet the call condition of the hardware device, S706 is performed.

S706: The PC manager starts a first device virtualization module.

S707: The PC manager registers a callback for the first device virtualization module.

S708: The PC manager notifies the first device virtualization module to enable a camera.

S709: The first device virtualization module obtains hardware device information from a cloud server.

S710: The first device virtualization module starts a second device virtualization module, and creates a control channel.

Optionally, when the hardware device information is not stored in the cloud server, the first device virtualization module sends a first request to the second device virtualization module over the control channel; the second device virtualization module sends the hardware device information to the first communication service manager based on the first request through the second communication service manager; and the first communication service manager sends the hardware device information to the first device virtualization module.

S711: The first device virtualization module indicates, based on the hardware device information, a virtual bus driver to create a virtual device driver.

S712: Create the virtual device driver based on the virtual bus driver.

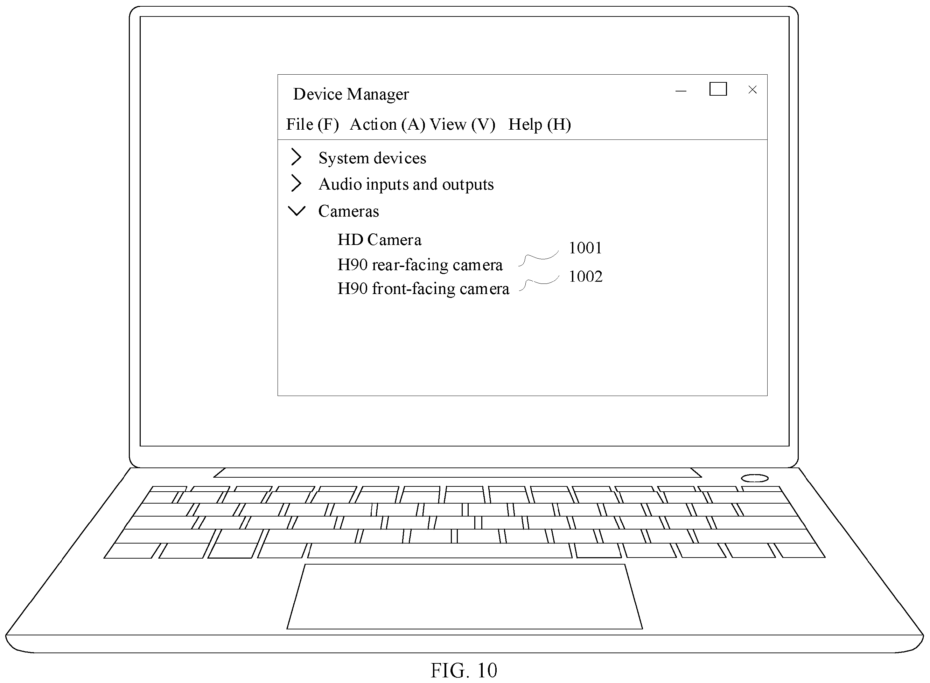

Optionally, after the virtual bus driver creates the virtual device driver, a device manager of the first terminal device can display the virtual device driver. For example, available hardware devices of the second terminal device include a front-facing camera and a rear-facing camera, and the device model of the second terminal device is H90. As shown in FIG. 10, after the virtual bus driver creates a virtual device driver corresponding to the front-facing camera and a virtual device driver corresponding to the rear-facing camera, the device manager of the first terminal device displays virtual devices corresponding to the two virtual device drivers: an H90 rear-facing camera 1001 and an H90 front-facing camera 1002.

S713: The first device virtualization module reads a third message from the virtual bus driver, where the third message is used to notify the first device virtualization module that the virtual device driver is created.

S714: The first device virtualization module sends a fourth message to the PC manager, where the fourth message is used to notify the PC manager that the virtual device driver is created.

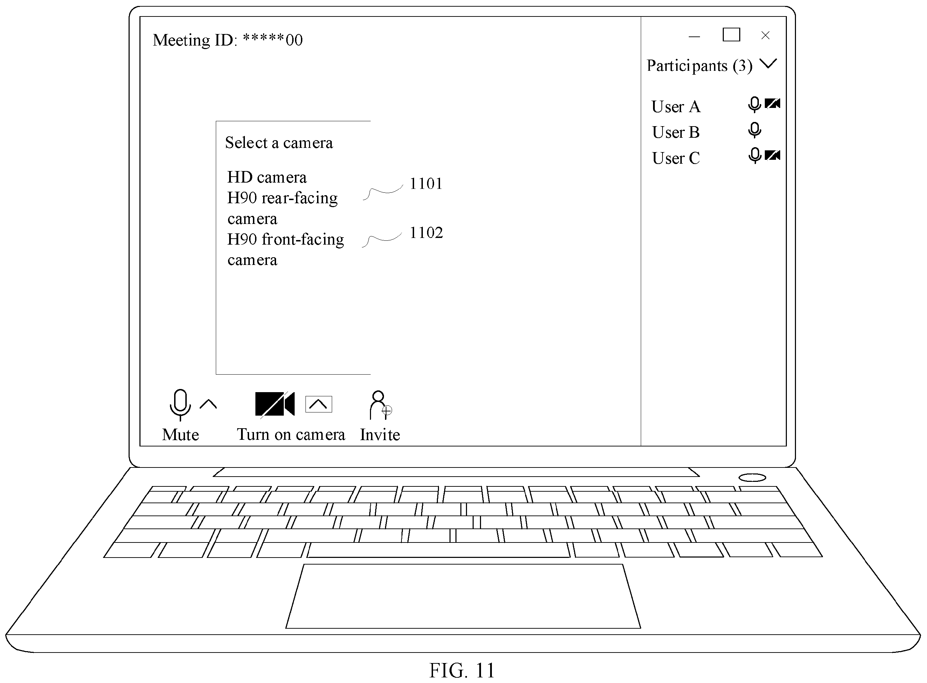

It should be understood that, after the virtual device driver is created, a virtual device corresponding to the virtual device driver may be displayed in a first application. For example, as shown in FIG. 11, the first application is a meeting application, the hardware device of the second terminal device includes the front-facing camera and the rear-facing camera, and the device model of the second terminal device is H90. After the virtual bus driver creates a virtual device driver corresponding to the front-facing camera and a virtual device driver corresponding to the rear-facing camera, an interface for selecting a camera of the first application includes virtual devices corresponding to the two virtual device drivers: the H90 rear-facing camera 1101 and the H90 front-facing camera 1102.

Optionally, a third-party application of the first terminal device sequentially sends, through a Windows multimedia framework and a driver development framework, a second request to a buffer message queue corresponding to the virtual device driver. After detecting that the buffer message queue corresponding to the virtual device driver changes, the first device virtualization module reads the second request. The first device virtualization module sequentially obtains a data stream from the second device virtualization module through the first communication service manager and the second communication service manager based on the second request. The first device virtualization module sends the data stream to the virtual bus driver, and the virtual bus driver matches the data stream with the second request, performs encapsulation, and feeds back an encapsulated data packet to the third-party application. For example, the third-party application may be a conferencing application. The virtual device driver may be a driver corresponding to a front-facing camera of the second terminal device and a driver corresponding to a rear-facing camera of the second terminal device. When calling the front-facing camera, the third-party application sends the second request to a buffer message queue of the driver corresponding to the front-facing camera. Then, the first device virtualization module transmits a video data stream shot by the front-facing camera to the third-party application.

Optionally, after reading the second request, the first device virtualization module may determine that the third-party application needs to call a first hardware device of the second terminal device, and sequentially send, to the second device virtualization module through the first communication service manager and the second communication service manager, an instruction for starting the first hardware device; the second device virtualization module obtains, based on the instruction, a data stream obtained by running the first hardware device, and sequentially sends, through the second communication service manager and the first communication service manager, the data stream obtained by running the first hardware device to the first device virtualization module; and the first device virtualization module sends the data stream obtained by running the first hardware device to the virtual bus driver, and the virtual bus driver matches the data stream obtained by running the first hardware device with the second request, performs encapsulation, and feeds back an encapsulated data packet to the third-party application.

S715: The first device virtualization module deletes the control channel.

It should be understood that, after detecting that all control channels are deleted, the second device virtualization module triggers unbinding, that is, a control request is no longer transmitted. After detecting all services are unbound, the second device virtualization module triggers deregistration. That all the services are unbound may be understood as: The first terminal device no longer continues to call a hardware device of the second terminal device.

It should be understood that a sequence of S715 and the process in which the third-party application obtains the data stream is not limited in this application, and S715 may be performed before, after, or during the process in which the third-party application obtains the data stream.

S716: After detecting that the second terminal device keeps away from the first terminal device, the second communication service manager determines that the second terminal device is offline.

It should be understood that the second terminal device keeps away from the first terminal device may be understood as that a distance between the second terminal device and the first terminal device is too long, resulting in the second terminal device and the first terminal device not being on a same local area network, or causing a Bluetooth connection between the first terminal device and the second terminal device to be disconnected.

S717: The first communication service manager sends a fifth message to the application, where the fifth message is used to notify the application that the second terminal device is offline. Correspondingly, the application receives the fifth message from the first communication service manager.

S718: The application notifies the first device virtualization module to disable the camera.

S719: The first device virtualization module sends a deletion message to the virtual bus driver, where the deletion message indicates the virtual bus driver to delete the virtual device driver. Correspondingly, the virtual bus driver receives the deletion message from the first device virtualization module.

S720: The virtual bus driver deletes the virtual device driver.

It should be understood that specific implementations from S701 to S720 are similar to steps in the method 400. For details, reference may be made to the foregoing descriptions. Details are not described herein again.

It should be understood that the sequence numbers of the foregoing methods do not mean execution sequences, and the execution sequences of the methods should be determined based on functions and internal logic of the processes.

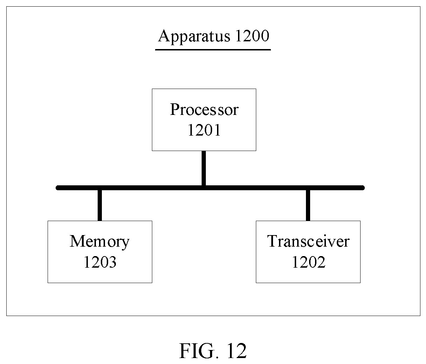

The foregoing describes the hardware device calling methods of embodiments of this application in detail with reference to FIG. 2 to FIG. 11. The following describes a hardware device calling apparatus according to an embodiment of this application in detail with reference to FIG. 12.

FIG. 12 is a block diagram of a hardware device calling apparatus 1200 according to an embodiment of this application. The apparatus 1200 includes a processor 1201, a transceiver 1202, and a memory 1203. The processor 1201, the transceiver 1202, and the memory 1203 communicate with each other through an internal connection path. The memory 1203 is configured to store instructions. The processor 1201 is configured to execute the instructions stored in the memory 1203, to control the transceiver 1202 to send a signal and/or receive a signal.

It should be understood that the apparatus 1200 may be specifically the first terminal device in the foregoing embodiments, and may be configured to perform the steps and/or the procedures corresponding to the first terminal device in the foregoing method embodiments. Optionally, the memory 1203 may include a read-only memory and a random access memory, and provide an instruction and data to the processor. A part of the memory may further include a nonvolatile random access memory. For example, the memory may further store information of a device type. The processor 1201 may be configured to execute the instruction stored in the memory, and when the processor 1201 executes the instruction stored in the memory, the processor 1201 is configured to execute steps and/or procedures of the foregoing method embodiment. The transceiver 1202 may include a transmitter and a receiver. The transmitter may be configured to implement the steps and/or procedures that correspond to the transceiver and that are used to perform sending actions. The receiver may be configured to implement the steps and/or procedures that correspond to the transceiver and that are used to perform receiving actions.

It should be understood that, in this embodiment of this application, the processor may be a central processing unit (central processing unit, CPU), or the processor may be another general-purpose processor, a digital signal processor (DSP), an application-specific integrated circuit (ASIC), a field-programmable gate array (FPGA) or another programmable logic device, a discrete gate or a transistor logic device, a discrete hardware component, or the like. The general-purpose processor may be a microprocessor, any conventional processor, or the like.

In an implementation process, steps in the foregoing methods may be implemented by using a hardware integrated logic circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor executes the instructions in the memory, and performs the steps of the foregoing method together with hardware in the processor. To avoid repetition, details are not described herein again.

This application further provides a computer-readable storage medium. The computer-readable storage medium is configured to store a computer program, and the computer program is used to implement the method in the foregoing method embodiments.

This application further provides a computer program product. The computer program product includes a computer program (also referred to as code or instructions), and when the computer program runs on a computer, the computer can perform the method in the foregoing method embodiments.

A person of ordinary skill in the art may be aware that the example modules and algorithm steps described with reference to embodiments disclosed in this specification can be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and module, refer to corresponding processes in the method embodiments. Details are not described herein.

In the several embodiments provided in this application, it should be understood that the disclosed systems, apparatuses, and methods may be implemented in other manners. For example, the foregoing described apparatus embodiment is merely an example. For example, the module division is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected based on actual requirements to achieve the objectives of the solutions in embodiments.

In addition, functional modules in embodiments of this application may be integrated into one processing module, or each of the modules may exist alone physically, or two or more modules may be integrated into one module.

If implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A hardware device calling method, applied to a system comprising a first terminal device and a second terminal device, wherein a user logs in to a same account on the first terminal device and the second terminal device, a wireless fidelity WiFi switch and a Bluetooth switch of each of the first terminal device and the second terminal device are both in an on state, and the method comprises:
when detecting the second terminal device, obtaining, by the first terminal device, hardware device information of the second terminal device, wherein the hardware device information comprises device identification information of the second terminal device, type identification information of at least one hardware device of the second terminal device, and hardware device capability information of the at least one hardware device;
creating, by the first terminal device, one virtual device driver for each hardware device of the at least one hardware device based on the hardware device information through a virtual bus driver, wherein the virtual bus driver is used to manage the virtual device driver; and
when detecting a message request of calling a first hardware device of the at least one hardware device by a first application through a first virtual device driver, receiving, by the first terminal device, a data stream from the second terminal device over a data channel, wherein the first virtual device driver is created by the virtual bus driver based on hardware device information of the first hardware device.

2. The method according to claim 1, wherein the first terminal device comprises an application layer and a kernel layer;
the application layer comprises the first application, a first device virtualization module, and a first communication service manager, wherein the first device virtualization module is configured to control creation and deletion of the virtual device driver and processes a request from an application, and the first communication service manager is used for data transmission between devices; and
the kernel layer comprises the virtual bus driver, the virtual device driver, and a driver development framework.

3. The method according to claim 2, wherein the obtaining, by the first terminal device, hardware device information of the second terminal device comprises:
obtaining, by the first device virtualization module, the hardware device information; and
the creating, by the first terminal device, one virtual device driver for each hardware device of the at least one hardware device based on the hardware device information through a virtual bus driver comprises:
creating, by the first device virtualization module through the virtual bus driver, a virtual device driver corresponding to attributes indicated by type identification information, device identification information, and hardware device capability information of each hardware device.

4. The method according to claim 3, wherein the creating a virtual device driver corresponding to attributes indicated by type identification information, device identification information, and hardware device capability information of each hardware device comprises:
converting, by the first device virtualization module, the type identification information and the device identification information of each hardware device into a hardware device type descriptor in a universal serial bus USB protocol, and converting the hardware device capability information of each hardware device into a hardware device configuration descriptor in the USB protocol;
transmitting, by the first device virtualization module, the hardware device type descriptor and the hardware device configuration descriptor to the virtual bus driver; and
creating, by the virtual bus driver, the virtual device driver corresponding to the hardware device type descriptor and the hardware device configuration descriptor.

5. The method according to claim 3 or 4, wherein the second terminal device comprises a second communication service manager, and the first communication service manager and the second communication service manager are used to implement data transmission between the first terminal device and the second terminal device; and
the obtaining, by the first device virtualization module, the hardware device information comprises:
establishing, by the first device virtualization module, a control channel;
sending, by the first communication service manager, a first request to the second communication service manager over the control channel, wherein the first request is used to request the hardware device information;
receiving, by the first communication service manager, the hardware device information from the second communication service manager; and
transmitting, by the first communication service manager, the hardware device information to the first device virtualization module.

6. The method according to claim 5, wherein after the transmitting, by the first communication service manager, the hardware device information to the first device virtualization module, the method further comprises:
deleting, by the first device virtualization module, the control channel.

7. The method according to claim 5 or 6, wherein the establishing, by the first device virtualization module, a control channel comprises:
when the hardware device information is not capable of being read from a cloud server, establishing, by the first device virtualization module, the control channel.

8. The method according to any one of claims 2 to 7, wherein the method further comprises:
when detecting that a buffer message queue corresponding to the first virtual device driver changes, reading, by the first device virtualization module, a second request from the buffer message queue, wherein the second request is used to request to obtain the data stream; and
the receiving, by the first terminal device, a data stream from the second terminal device over a data channel comprises:
sending, by the first device virtualization module, the data stream to the virtual bus driver based on the second request; and
matching, by the virtual bus driver, the data stream with the second request in the buffer message queue and performing encapsulation to obtain an encapsulated data packet, and feeding back the encapsulated data packet to the first application.

9. The method according to any one of claims 2 to 8, wherein the method further comprises:
when detecting that the second terminal device is offline, deleting, by the first terminal device through the virtual bus driver, a virtual device driver corresponding to the at least one hardware device, wherein the second terminal device being offline indicates that a WiFi switch and/or a Bluetooth switch of at least one device of the first terminal device and the second terminal device are/is in an off state, or the first terminal device and the second terminal device are not logged in to a same account.

10. The method according to claim 9, wherein the deleting, by the first terminal device through the virtual bus driver, a virtual device driver corresponding to the at least one hardware device comprises:
detecting, by the first communication service manager, that the second terminal device is offline, and notifying the first device virtualization module to delete the virtual device driver corresponding to the at least one hardware device;
transmitting, to the virtual bus driver by the first device virtualization module, a deletion message of the virtual device driver corresponding to the at least one hardware device; and
deleting, by the virtual bus driver based on the deletion message, the virtual device driver corresponding to the at least one hardware device.

11. The method according to any one of claims 1 to 10, wherein the obtaining, by the first terminal device, hardware device information of the second terminal device comprises:
when a first switch key on a setting interface of the first terminal device and a second switch key on a setting interface of the second terminal device are in an on state, obtaining the hardware device information, wherein the first switch key is used by the user to choose to enable or disable a function of calling a hardware device, and the second switch key is used by the user to choose to enable or disable a called function of the hardware device.

12. The method according to claim 11, wherein the method further comprises:
when the first switch key and/or the second switch key are/is switched from the on state to an off state, deleting, by the first terminal device through the virtual bus driver, the virtual device driver corresponding to the at least one hardware device.

13. The method according to claim 12, wherein the method further comprises:
displaying, by the first terminal device, the setting interface, wherein the setting interface comprises the first switch key; and
adjusting the first switch key to the on state or the off state based on a selection operation performed by the user on the first switch key.

14. The method according to any one of claims 1 to 13, wherein the first terminal device comprises a second application; and
installing, by the first terminal device, the virtual bus driver comprises:
installing, by the first terminal device, the virtual bus driver by using the second application.

15. The method according to any one of claims 1 to 14, before the obtaining, by the first terminal device, hardware device information of the second terminal device, the method further comprises:
detecting, by the first terminal device, whether a call condition of the hardware device is met, wherein the call condition comprises at least one of the following:
a device type of the second terminal device is a preset type;
the first terminal device supports a capability of calling the hardware device; or
a function of calling the hardware device by the first terminal device is in an on state; and
the obtaining hardware device information of the second terminal device comprises:
obtaining the hardware device information when the call condition is met.

16. The method according to any one of claims 1 to 15, wherein the obtaining, by the first terminal device, hardware device information of the second terminal device comprises:
reading, by the first terminal device, the hardware device information from the cloud server.

17. The method according to any one of claims 1 to 16, wherein the at least one hardware device comprises a camera and/or a microphone.

18. A hardware device calling apparatus, comprising a processor, wherein the processor is coupled to a memory, the memory is configured to store a computer program, and when the processor calls the computer program, the apparatus is enabled to perform the method according to any one of claims 1 to 17.

19. A computer-readable storage medium, configured to store a computer program, wherein the computer program comprises instructions for implementing the method according to any one of claims 1 to 17.

20. A computer program product, wherein the computer program product comprises computer program code, and when the computer program code is run on a computer, the computer is enabled to implement the method according to any one of claims 1 to 17.
